# EUROPEAN PATENT APPLICATION

(11) **EP 4 135 471 A1**
(43) Date of publication of application: **15.02.2023**
(21) Application number: 21812783.5
(22) Date of filing: 20.05.2021
(51) Int. Cl.: H04W 76/15

(54) **ELECTRONIC DEVICE, WIRELESS COMMUNICATION METHOD, AND COMPUTER READABLE STORAGE MEDIUM**

(30) Priority: 27.05.2020 CN 202010461099
(71) Applicant: Sony Group Corporation, Minato-Ku, Tokyo, 108-0075 (JP)
(72) Inventor: LIU, Min, Beijing 100028 (CN); ZHOU, Mingtuo, Shanghai 100028 (CN)
(74) Representative: D Young & Co LLP
(86) International application number: PCT/CN2021/094757
(87) International publication number: WO 2021/238750

(57) **Abstract**

An electronic device, a wireless communication method, and a computer readable storage medium. The electronic device comprises a processing circuit, configured to: be connected to an integrated access and backhaul (IAB) donor by means of one or more IAB nodes; be directly connected to a serving base station of the electronic device; and send uplink data by using IAB connection to the IAB donor or direction connection to the serving base station, and receive downlink data by using the IAB connection or the direct connection. A hybrid connection mode of IAB connection and direct connection is adopted so as to take advantage of the IAB connection and the direct connection, thereby satisfying the requirements for both time delay and energy saving.

## Description

This application claims priority to Chinese Patent Application No. 202010461099.0, titled "ELECTRONIC DEVICE, WIRELESS COMMUNICATION METHOD, AND COMPUTER READABLE STORAGE MEDIUM", filed on May 27, 2020 with the China National Intellectual Property Administration, which is incorporated herein by reference in its entirety.

### FIELD

Embodiments of the present disclosure generally relate to the field of wireless communication, and in particular to an electronic device, a wireless communication method, and a computer readable storage medium. More specifically, the present disclosure relates to an electronic device operating as a network side device in a wireless communication system, an electronic device operating as user equipment in a wireless communication system, a wireless communication method performed by the network side device in a wireless communication system, a wireless communication method performed by the user equipment in a wireless communication system, and a computer readable storage medium.

### BACKGROUND

In an IAB (Integrated Access and Backhaul) network, an IAB donor may be connected to the core network, and an IAB node serving as a relay is directly or indirectly connected to the IAB donor, and in turn connected to the core network. The IAB donor is also referred to as a donor base station. A wireless access link and a wireless backhaul (BH) link are integrated in the IAB node. The access link is a communication link between a UE and the IAB node, and the backhaul link is a communication link between IAB nodes or between the IAB node and the donor base station. The UE (user equipment) may be connected to the donor via one or more IAB nodes.

The IAB technology is more suitable for application in scenarios with high density, so as to reduce workload in deploying a wired transmission network and expand coverage of a cell. On another hand, a UE may communicate through an IAB node in a short distance, which is thereby energy-efficient. However, since the LTE may be connected to the donor via one or more IAB nodes, a huge delay may occur due to a long time for relay in a case of a long link.

Therefore, the present disclosure expects to propose a hybrid connection mode integrating both an IAB connection and a direct connection, in order to solve at least one of the above problems.

### SUMMARY

This section provides a general summary of the present disclosure, rather than a comprehensive disclosure of a full scope or all features of the present disclosure.

An objective of the present disclosure is to provide an electronic device and a wireless communication method, and a computer-readable storage medium, so as to propose a hybrid connection mode integrating both IAB connection and direct connection, and thereby utilize advantages of both the IAB connection and the direct connection.

According to an aspect of the present disclosure, an electronic device is provided. The electronic device includes processing circuitry, configured to: connect to an integrated access and backhaul, IAB, donor through one or more IAB nodes; connect directly to a serving base station of the electronic device; and transmit uplink data utilizing an IAB connection with the IAB donor or a direct connection with the serving base station, and receive downlink data utilizing the IAB connection or the direct connection.

According to another aspect of the present disclosure, an electronic device is provided. The electronic device includes processing circuitry, configured to: connect directly to a user equipment serviced by the electronic device, wherein the user equipment is connected to an integrated access and backhaul, IAB, donor through one or more IAB nodes; and transmit downlink data utilizing an IAB connection between the user equipment and the IAB donor or a direct connection between the user equipment and the electronic device, and receive uplink data utilizing the IAB connection or the direct connection.

According to another aspect of the present disclosure, a wireless communication method is provided. The method includes: connecting to an integrated access and backhaul, IAB, donor through one or more IAB nodes, and connecting directly to a serving base station of the electronic device; and transmitting uplink data using an IAB connection with the IAB donor or a direct connection with the serving base station, and receiving downlink data using the IAB connection or the direct connection.

According to another aspect of the present disclosure, a wireless communication method is provided. The method includes: connecting directly to a user equipment serviced by the electronic device, wherein the user equipment is connected to an integrated access and backhaul, IAB, donor through one or more IAB nodes; and transmitting downlink data using an IAB connection between the user equipment and the IAB donor or a direct connection between the user equipment and the electronic device, and receiving uplink data using the IAB connection or the direct connection.

According to another aspect of the present disclosure, a computer-readable storage medium comprising executable computer instructions is provided. The executable computer instructions, when executed by a computer, cause the computer to perform the wireless communication method according to the embodiments of the present disclosure.

According to another aspect of the present disclosure, a computer program is provided. The computer program, when executed by the computer, causes the computer to perform the wireless communication method according to the embodiments of the present disclosure.

With the electronic device, the wireless communication method, and the computer-readable storage medium, the electronic device serving as a user equipment can be connected to an IAB donor and a serving base station, so that uplink data/ downlink data can be transmitted/received using an IAB connection or a direct connection. Thereby, the electronic device serving as the user equipment can flexibly select the direct connection or the IAB connection, so as to utilize advantage of both the direct connection and the IAB connection, and satisfy requirements on both network delay and energy saving.

Further areas of applicability will become apparent from the description provided herein. The description and specific examples in this summary are for purposes of illustration only and are not intended to limit the scope of the present disclosure.

### BRIEF DESCRIPTION OF THE DRAWINGS

The drawings are described herein for illustrating selected embodiments rather than all possible embodiments, and are not intended to limit the scope of the present disclosure. In the drawings:
Figure 1 is a block diagram showing an example of a configuration of an electronic device according to an embodiment of the present disclosure;
Figure 2(a) and Figure 2(b) are schematic diagrams illustrating an architecture of network in which direct connections and IAB connections are maintained according to an embodiment of the present disclosure;
Figure 3(a), Figure 3(b) and Figure 3(c) are schematic diagrams illustrating scenarios under a first architecture according to an embodiment of the present disclosure;
Figure 4(a) and Figure 4(b) are schematic diagrams illustrating scenarios under a second architecture according to an embodiment of the present disclosure;
Figure 5 is a signaling flow diagram illustrating a method of determining an IAB node and a serving base station according to an embodiment of the present disclosure;
Figure 6 is a signaling flow diagram illustrating a method of maintaining a direct connection and an IAB connection under the first architecture according to an embodiment of the present disclosure;
Figure 7 is a signaling flow diagram illustrating a method of maintaining a direct connection and an IAB connection under the first architecture according to an embodiment of the present disclosure;
Figure 8 is a signaling flow diagram illustrating a method of maintaining a direct connection and an IAB connection under the second architecture according to an embodiment of the present disclosure;
Figure 9 is a signaling flow diagram illustrating a method of maintaining a direct connection and an IAB connection under the second architecture according to an embodiment of the present disclosure;
Figure 10 is a schematic diagram illustrating a scenario of handing over between IAB donors under the first architecture according to an embodiment of the present disclosure;
Figure 11 is a signaling flow diagram illustrating a method of handing over between IAB donors under the first architecture according to an embodiment of the present disclosure;
Figure 12 is a schematic diagram illustrating a scenario of handing over between IAB parent nodes under the first architecture according to an embodiment of the present disclosure;
Figure 13 is a signaling flow diagram illustrating a method of handing over between IAB parent nodes under the first architecture according to an embodiment of the present disclosure;
Figure 14 is a schematic diagram illustrating a scenario of handover of a serving base station under the second architecture according to an embodiment of the present disclosure;
Figure 15 is a signaling flow diagram illustrating a method of handing over between serving base stations under the second architecture according to an embodiment of the present disclosure;
Figure 16 is a schematic diagram illustrating a scenario of handing over between IAB donors under the second architecture according to an embodiment of the present disclosure;
Figure 17 is a signaling flow diagram illustrating a method of handing over IAB donors under the second architecture according to an embodiment of the present disclosure;
Figure 18 is a schematic diagram illustrating a method of transmitting uplink data in a network in which a direct connection and an IAB connection are maintained according to an embodiment of the present disclosure;
Figure 19 is a block diagram showing an example of a configuration of an electronic device according to an embodiment of the present disclosure;
Figure 20 is a signaling flow diagram illustrating a method of coordinating uplink resources and downlink resources under the first architecture according to an embodiment of the present disclosure;
Figure 21 is a signaling flow diagram illustrating a method of coordinating uplink resources and downlink resources under the second architecture according to an embodiment of the present disclosure;
Figure 22 is a schematic diagram illustrating a method of transmitting downlink data in a network in which a direct connection and an IAB connection are maintained according to an embodiment of the present disclosure;
Figure 23 is a flowchart illustrating a wireless communication method performed by an electronic device according to an embodiment of the present disclosure;
Figure 24 is a flowchart illustrating a wireless communication method performed by an electronic device according to another embodiment of the present disclosure;
Figure 25 is a block diagram showing a first example of a schematic configuration of an eNB (Evolved Node B);
Figure 26 is a block diagram showing a second example of a schematic configuration of an eNB;
Figure 27 is a block diagram showing an example of a schematic configuration of a smartphone; and
Figure 28 is a block diagram showing an example of a schematic configuration of a car navigation device.

Although the present disclosure is susceptible to various modifications and alternatives, specific embodiments of the present disclosure are shown in the drawings by way of examples and are described in detail herein. However, it should be understood that description of the specific embodiments herein is not intended to limit the present disclosure to the specific forms disclosed, but to cover all modifications, equivalents and alternatives that fall within the spirit and scope of the present disclosure. It should be noted that same or similar reference numerals throughout the drawings indicate the same or like components.

### DETAILED DESCRIPTION

The embodiments of the present disclosure are described completely with reference to the drawings. The following description is merely exemplary, and is not intended to limit the present disclosure and application or use thereof.

Exemplary embodiments are provided so that the present disclosure is thorough and fully conveys the scope thereof to those skilled in the art. Numerous specific details, such as examples of specific components, devices, and methods, are set forth to provide a comprehensive understanding of the embodiments of the present disclosure. It is apparent to those skilled in the art that the exemplary embodiments may be implemented in many different forms without specific details, and should be construed as limiting the scope of the present disclosure. In some exemplary embodiments, well-known processes, well-known structures, and well-known technologies are not described in detail.

The description are made in the following order:
1. Overview;
2. Configuration examples of user equipment;
3. Configuration examples of a base station;
4. Method embodiments;
5. Application examples.

### <1. Overview>

The present disclosure is intended to propose a hybrid connection mode integrating both an IAB connection and a direct connection, so that a user equipment/base station device can flexibly select the IAB connection or the direct connection for transmitting uplink data/downlink data. In this way, requirements on delay and energy saving are both satisfied.

A wireless communication system according to the present disclosure may be a 5G NR communication system, and the IAB technology may be applied in the wireless communication system. The wireless communication system according to the present disclosure may include one or more IAB donors, one or more IAB nodes, one or more UEs, one or more serving base stations for the UEs.

An IAB node and an IAB donor according to the present disclosure may be network side devices, respectively. A network side device may be a base station device deployed by an operator, such as an eNB or a gNB (a base station in a fifth-generation communication system). In addition, the IAB node according to the present disclosure may be an electronic device independent from a base station device and having a part of functions of the base station device. The IAB node may have functions of transmitting and receiving data, and may be connected to a UE via an access link, or connected to another IAB node or a donor node via a backhaul link.

A serving base station according to the present disclosure may be an eNB or a gNB.

The IAB donor and the serving base station according to the present disclosure may be located on a satellite device, which may be a non-transparent satellite device with data processing capability. In addition, the IAB donor and the serving base station may be located in a terrestrial station connected to a transparent satellite device without data processing capability, and the terrestrial station is responsible for processing data forwarded by the transparent satellite device. That is, the wireless communication system according to the present disclosure may include an NTN (Non-terrestrial network) and a TN (Terrestrial network).

According to an embodiment of the present disclosure, in an IAB connection, the IAB donor located on the non-transparent satellite device or in the terrestrial station connected with the transparent satellite device may be connected to a core network, and the IAB node located on the ground is connected to the donor node directly or indirectly and in turn connected to the core network. The UE is connected to the donor node via one or more IAB nodes located on the ground. In this way, since the IAB nodes are located on the ground and are relatively close to the UE, energy consumption of the UE may be reduced. However, since the satellite device is far away from the UE, delay of the UE may be increased. Therefore, the hybrid connection mode integrating both an IAB connection and a direct connection proposed in the present disclosure can realize a more obvious effect when applied in the NTN network.

The UE according to the present disclosure may be a mobile terminal (such as a smartphone, a tablet personal computer (PC), a notebook PC, a portable game terminal, a portable/dongle mobile router, and a digital camera), or an in-vehicle terminal (such as a car navigation device). The user equipment may be implemented as a terminal for machine-to-machine (M2M) communication (also referred to as a machine type communication (MTC) terminal). In addition, the user equipment may be a wireless communication module (such as an integrated circuit module including a single wafer) installed on each of the aforementioned terminals.

### <2. Configuration examples of user equipment>

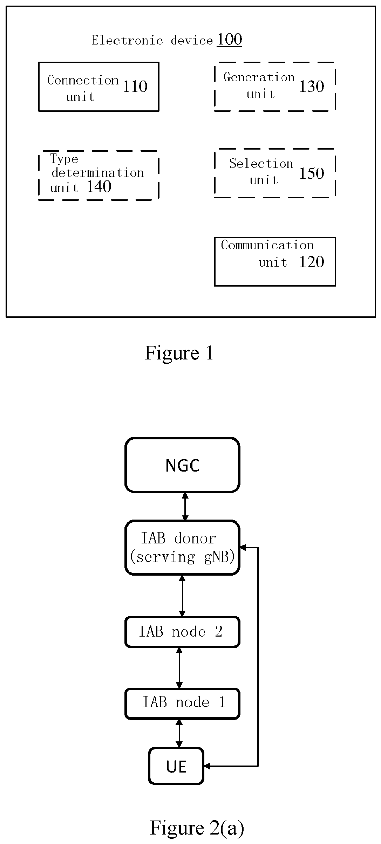

Figure 1 is a block diagram illustrating an example of a configuration of an electronic device 100 according to an embodiment of the present disclosure. The electronic device 100 here may serve as user equipment in a wireless communication system.

As shown in Figure 1, the electronic device 100 may include a connection unit 110 and a communication unit 120.

Here, each unit of the electronic device 100 may be included in processing circuitry. It should be noted that the electronic device 100 may include a single processing circuit or multiple processing circuits. Further, the processing circuitry may include various discrete functional units to perform various different functions and/or operations. It should be noted that these functional units may be physical entities or logical entities, and units with different names may be implemented by a same physical entity.

According to an embodiment of the present disclosure, the connection unit 110 may be configured to connect the electronic device 100 to an IAB donor via one or more IAB nodes, and directly connect the electronic device 100 to a serving base station of the electronic device 100.

According to an embodiment of the present disclosure, the electronic device 100 may transmit uplink data through the communication unit 120 by using an IAB connection with the IAB donor or a direct connection with the serving base station, and receive downlink data through the communication unit 120 by using the IAB connection or the direct connection.

It can be seen that the electronic device 100 according to the embodiments of the present disclosure may be connected to both the IAB donor and the serving base station, and therefore may transmit uplink data/receive downlink data by using the IAB connection or the direct connection. In this way, the electronic device 100 can flexibly select between the direct connection and the IAB connection, and take advantages of both the direct connection and the IAB connection, so that requirements on network delay and energy saving are both satisfied.

According to embodiments of the present disclosure, two network architectures are proposed, each of which maintains both a direct connection and an IAB connection. In a first architecture, an IAB donor of the electronic device 100 and a serving base station of the electronic device 100 are located in a same device. That is, the electronic device 100 can be connected to the IAB donor via one or more IAB nodes, and can also be directly connected to the serving base station, since the IAB donor is also the serving base station of the electronic device 100. In a second architecture, the IAB donor of the electronic device 100 and the serving base station of the electronic device 100 are located in different devices. That is, the electronic device 100 can be connected to the IAB donor via one or more IAB nodes, and can also be directly connected to a serving base station different from the IAB donor.

Figure 2(a) is a schematic diagram illustrating a first architecture of a network in which a direct connection and an IAB connection are maintained according to an embodiment of the present disclosure. As shown in Figure 2(a), the LTE is connected to an IAB donor via IAB node 1 and IAB node 2, and the IAB donor may be connected to an NGC (Next Generation Core, a 5G core network). Further, the IAB donor is a serving gNB of the UE, and thus the UE may be directly connected to the serving gNB.

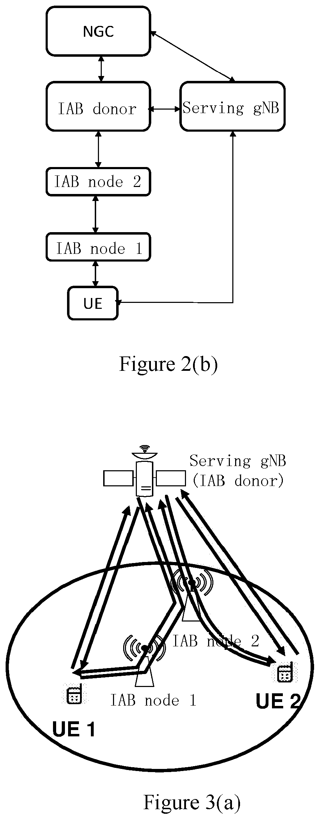

Figure 2(b) is a schematic diagram illustrating a second architecture of a network in which a direct connection and an IAB connection are maintained according to an embodiment of the present disclosure. As shown in Figure 2(b), the LTE is connected to an IAB donor via IAB node 1 and IAB node 2, and the IAB donor may be connected to an NGC. Further, the LTE may be directly connected to a serving gNB, and the serving gNB may be connected to the NGC. In addition, since both the IAB donor and the serving gNB are base station devices, the IAB donor and the serving gNB may communicate with each other via an Xn interface.

Although Figure 2(a) and Figure 2(b) show examples in which the UE is connected to an IAB donor via two IAB nodes, the number of IAB nodes may not be limited to 2 in practice. In addition, in the following description, the serving base station is illustrated by taking the gNB as an example.

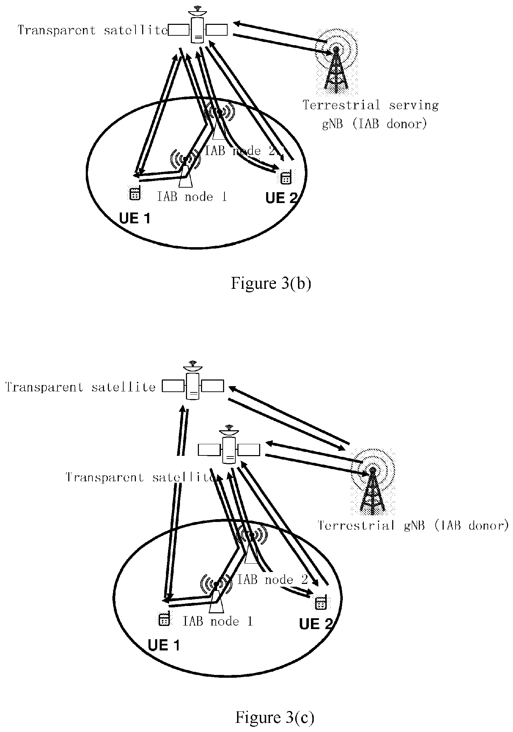

Figure 3(a), Figure 3(b) and Figure 3(c) are schematic diagrams each illustrating a scenario under the first architecture according to an embodiment of the present disclosure. In Figure 3(a), Figure 3(b) and Figure 3(c), each of LTE1 and LTE2 may include the electronic device 100, and the serving gNB and the IAB donor are a same device.

As shown in Figure 3(a), the serving gNB (IAB donor) is located on a non-transparent satellite device. UE1 is connected to the IAB donor via IAB node 1 and IAB Node 2, and may be connected directly to the serving gNB. Similarly, UE2 is connected to the IAB donor via IAB Node 2, and may be connected directly to the serving gNB.

As shown in Figure 3(b), the serving gNB (IAB donor) is located on a terrestrial base station device connected to a transparent satellite device. UE1 is connected to the transparent satellite devices via IAB node 1 and IAB node 2, and the transparent satellite device is connected to the IAB donor on the terrestrial; and additionally, UE1 may be directly connected to the transparent satellite device, and the transparent satellite device is connected to the serving gNB on the ground. Similarly, UE2 is connected via IAB Node 2 to the transparent satellite device, and the transparent satellite device is connected to the IAB donor on the ground; and additionally, UE2 may be connected directly to the transparent satellite device, and the transparent satellite device is connected to the serving gNB on the ground.

As shown in Figure 3(c), the serving gNB (IAB donor) is located on a terrestrial base station device connected to a transparent satellite device, and a different transparent satellite device may be connected to a same terrestrial base station device. UE1 is connected to transparent satellite device 2 via IAB node 1 and IAB node 2, and the transparent satellite device 2 is connected to the IAB donor on the ground; and additionally, UE1 may be directly connected to a transparent satellite device 1, and the transparent satellite device 1 is connected to the serving gNB on the ground. Similarly, UE2 is connected to the transparent satellite device 2 via IAB node 2, and the transparent satellite device 2 is connected to the IAB donor on the ground; and additionally, UE2 may be connected directly to the transparent satellite device 2, and the transparent satellite device 2 is connected to the serving gNB on the ground. Here, although UE1 is connected to the transparent satellite device 2 via IAB node 1 and IAB node 2 and is directly connected to the transparent satellite device 1, the architecture is the same as the first architecture in which the serving base station is also the IAB donor, as the transparent satellite device 1 and the transparent satellite device 2 are both connected to a same terrestrial base station device.

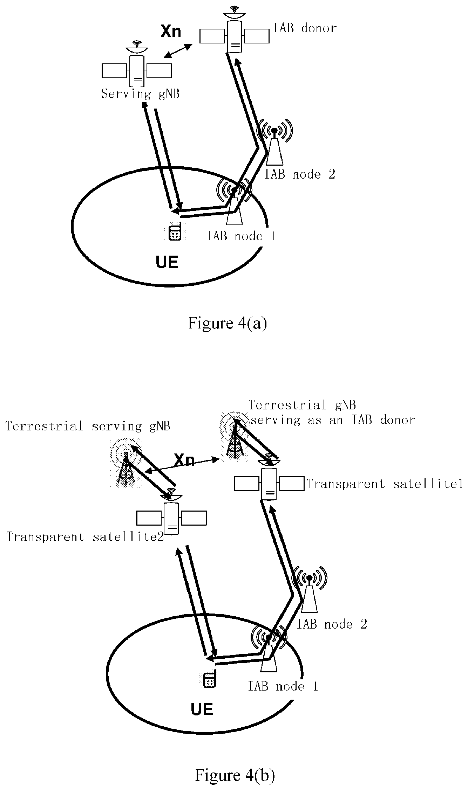

Figure 4(a) and Figure 4(b) are schematic diagrams each illustrating a scenario under a second architecture according to an embodiment of the present disclosure. In Figure 4(a) and Figure 4(b), a UE may include the electronic device 100, and a serving gNB and an IAB donor are different devices.

As shown in Figure 4(a), the serving gNB is located on a non-transparent satellite device, and the IAB donor is also located on the non-transparent satellite device. The UE is connected to the IAB donor via IAB Node 1 and IAB Node 2, and may be connected directly to the serving gNB. Here, the IAB donor and serving gNB may communicate with each other via an Xn interface.

As shown in Figure 4(b), the serving gNB is located in a terrestrial base station device connected to a transparent satellite device, and the IAB donor is also located in a terrestrial base station device connected to a transparent satellite device. The UE is connected to a transparent satellite device 1 via IAB node 1 and IAB node 2, the transparent satellite device 1 is connected to the gNB on the ground serving as the IAB donor, and the UE may be directly connected to a transparent satellite device 2, and the transparent satellite device 2 may be connected to the gNB on the ground serving as the serving gNB. Here, the serving gNB on the ground and the gNB on the ground serving as the IAB donor may communicate with each other via an Xn interface.

As mentioned above, some scenarios of the two architectures according to the present disclosure are described by way of examples, but the present disclosure is not limited to the scenarios. In the present disclosure, a connection in which a LTE is connected to an IAB donor via one or more IAB nodes is also referred to as an IAB connection, and a connection between the LTE and a serving base station is referred to as a direct connection. That is, according to embodiments of the present disclosure, both the direct connection and the IAB connection can be maintained for the UE. In addition, each of the direct connection and the IAB connection can provide uplink transmission and downlink transmission.

According to an embodiment of the present disclosure, as shown in Figure 2, the electronic device 100 may further include a generation unit 130 and a type determination unit 140.

According to an embodiment of the present disclosure, the generation unit 130 may be configured to generate request information for requesting identification information or type information from a serving base station or from an IAB node serving as a parent node of the electronic device 100 (the parent node refers to an IAB node directly connected to the electronic device 100). Further, the electronic device 100 may transmit, through the communication unit 120, the request information generated by the generation unit 130 to the serving base station or the IAB node serving as a parent node of the electronic device 100. According to an embodiment of the present disclosure, the electronic device 100 may carry the request information in the Msg. 3 (message 3) during a random access procedure.

According to an embodiment of the present disclosure, the electronic device 100 may receive, through the communication unit 120, response information from the serving base station or the IAB node serving as a parent node of the electronic device 100, where the response information may include identification information or type information of the serving base station or the IAB node serving as a parent node of the electronic device 100. According to an embodiment of the present disclosure, the electronic device 100 may receive the response information through the Msg. 4 (message 4) during the random access procedure.

According to an embodiment of the present disclosure, the type determination unit 140 may be configured to determine, based on the identification information or the type information, whether a device transmitting the response information is a serving base station or an IAB node. In an example, in a case that the response information includes type information, the type information may include a type of the device, such as a serving base station or an IAB node. For example, the type may be indicated by using 1 bit in the response information, so that the type determination unit 140 may determine, based on the type information, whether the device transmitting the response information is a serving base station or an IAB node. In a case that the response information includes identification information, since an identification of the IAB node is different from an identification of the serving base station, the type determination unit 140 may determine, based on the identification information, whether the device transmitting the response information is a serving base station or an IAB node.

According to an embodiment of the present disclosure, a timer may be set by the electronic device 100 to be started once the request information is transmitted. In a case that no response message is received before the timer expires, the electronic device 100 may give up accessing the IAB node or the serving base station.

According to an embodiment of the present disclosure, the electronic device 100 may generate the request information after establishing a connection with a serving base station or an IAB node serving as a parent node, and then determine whether an IAB node or a serving base station is connected. Alternatively, the electronic device 100 may generate the request information in a process of establishing a connection with a serving base station or an IAB node serving as a parent node, and then determine whether the device that the electronic device 100 is connecting to is an IAB node or a serving base station.

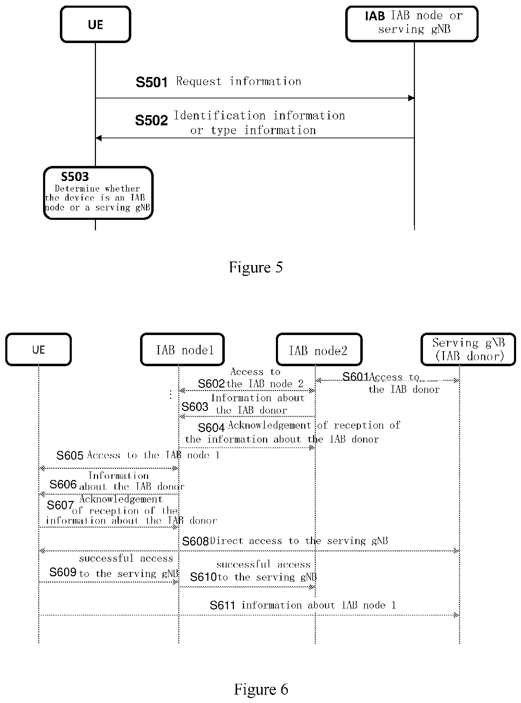

Figure 5 is a signaling flow diagram illustrating a method of determining an IAB node and a serving base station according to an embodiment of the present disclosure. As shown in Figure 5, in step S501, request information is transmitted from a UE to an IAB node serving as a parent node or to a serving gNB, requesting a type of the device. Next, in step S502, identification information or type information is transmitted from the IAB node or the serving gNB to the UE. Next, in step S503, it is determined whether the device transmitting response information is an IAB node or a serving gNB by the UE based on the identification information or the type information.

As described above, since the electronic device 100 can maintain both a direct connection and an IAB connection, the electronic device 100 can access the serving base station or the parent node through a random access procedure. However, after accessing the serving base station or the parent node, the electronic device 100 is not aware of which type of device is connected, and therefore the electronic device 100 may transmit a request information query to determine whether the connected device is an IAB node or a serving base station.

According to an embodiment of the present disclosure, in the first architecture, the connection unit 110 may be configured to connect the electronic device 100 to an IAB donor via one or more IAB nodes. That is, the electronic device 100 may first be connected to the IAB node serving as a parent node.

According to an embodiment of the present disclosure, after connected to the IAB donor via one or more IAB nodes, the electronic device 100 may receive, through the communication unit 120, information of the IAB donor from the IAB node serving as a parent node of the electronic device 100, and the connection unit 110 may determine that the IAB donor is a serving base station of the electronic device 100. Further, based on the information of the IAB donor, the connection unit 110 may connect the electronic device 100 directly to the IAB donor.

Figure 6 is a signaling flow diagram illustrating a method of maintaining a direct connection and an IAB connection under the first architecture according to an embodiment of the present disclosure. In Figure 6, a LTE may include the electronic device 100. As shown in Figure 6, in step S601, a connection is established between IAB node 2 and an IAB donor. In step S602, a connection is established between IAB node 1 and the IAB node 2. In step S603, information about an IAB donor is transmitted from the IAB node 2 to the IAB node 1. In step S604, receipt of the information about an IAB donor is acknowledged by the IAB node 1 to the IAB node 2. In step S605, a connection between the UE and the IAB node 1 is established. In step S606, the information about an IAB donor is transmitted from the IAB node 1 to the LTE. In step S607, receipt of the information about an IAB donor is acknowledged by the UE to the IAB node 1. In step S608, the IAB donor is determined as a serving gNB by the UE, and a connection is established directly between the serving gNB and the UE. In step S609, a message is transmitted form the UE to the IAB Node 1, indicating that the LTE successfully accesses the serving gNB. In step S610, a message is transmitted from the IAB node 1 to the IAB node 2, indicating that the UE successfully accesses the serving gNB. In step S611, information about the IAB node 1 is transmitted from the UE to the serving gNB, notifying the serving gNB that the IAB node 1 is a parent node of the UE. In this way, the UE is able to be connected to the IAB donor via IAB Node 1 and IAB Node 2, and directly connected to the serving gNB.

As described above, according to the embodiments of the present disclosure, in the first architecture, the UE can first be connected to an IAB donor via one or more IAB nodes, and then directly connected to a serving base station, thereby establishing both a direct connection and an IAB connection.

According to an embodiment of the present disclosure, the connection unit 110 may be configured to first establish a direct connection between the electronic device 100 and the serving base station. That is, the electronic device 100 is directly connected to a serving base station first.

According to an embodiment of the present disclosure, after directly connected to the serving base station, the electronic device 100 may receive, from the serving base station through the communication unit 120, recommendation information about an IAB node as a parent node of the electronic device 100. Here, the serving base station may recommend an IAB node as a parent node based on a location of the IAB node and/or an available bandwidth of the IAB node. For example, the serving base station may determine the IAB node closest to the electronic device 100 as a recommended parent node, or may determine the IAB node with the largest available bandwidth as the recommended parent node.

According to an embodiment of the present disclosure, the connection unit 110 may determine an IAB node as a parent node based on the recommendation information. For example, the connection unit 110 may determine the IAB node included in the recommendation information as the parent node. Further, the connection unit 110 may connect the electronic device 100 to the IAB node serving as the parent node.

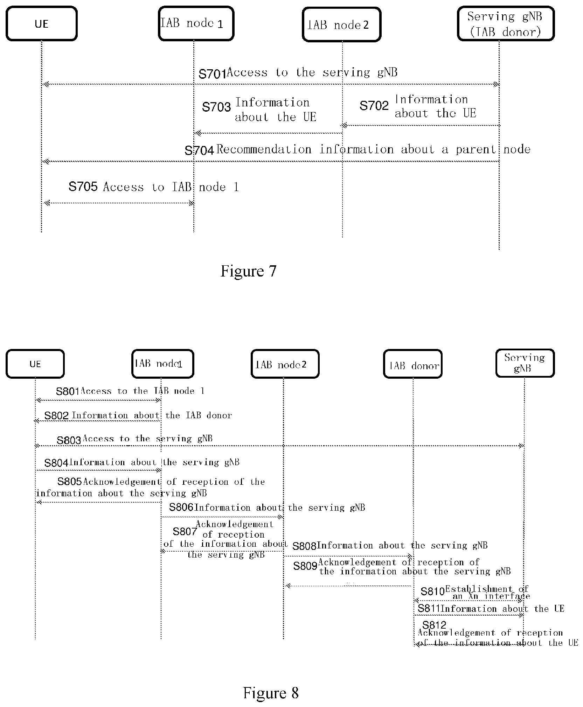

Figure 7 is a signaling flow diagram illustrating a method of maintaining a direct connection and an IAB connection under the first architecture according to an embodiment of the present disclosure. In Figure 7, a LTE may include the electronic device 100. As shown in Figure 7, in step S701, a direct connection is established between the UE and a serving gNB. In step S702, information of the UE is transmitted from the serving gNB to an IAB node 2. In step S703, the information about the UE is transmitted from the IAB node 2 to an IAB node 1. Therefore, each IAB node knows the information about the UE. In step S704, recommendation information about a parent node is transmitted from the serving gNB to the UE. In step S705, the IAB node 1 is determined as the parent node by the UE based on the recommendation information, and a connection between the IAB node 1 and the UE is established. Here, it is assumed that a connection is established between the IAB node 1 and the IAB Node 2, and a connection is established between the IAB Node 2 and the IAB donor. Therefore, the UE can be connected to the IAB donor via the IAB Node 1 and the IAB Node 2, and connected directly to the serving gNB.

As described above, according to the embodiments of the present disclosure, in the first architecture, the UE may be connected directly to a serving base station first, and then connected to an IAB node serving as a parent node, thereby establishing both a direct connection and an IAB connection.

According to the embodiments of the present disclosure, in the second architecture, the connection unit 110 may first connect the electronic device 100 to the IAB donor via one or more IAB nodes. That is, the electronic device 100 may be connected to an IAB node serving as a parent node first.

According to an embodiment of the present disclosure, after connecting to the IAB donor via one or more IAB nodes, the electronic device 100 may receive information about the IAB donor through the communication unit 120 from the IAB node that is a parent node of the electronic device 100. Further, the connection unit 110 may determine a serving base station different from the IAB donor based on the information about the IAB donor. That is, the serving base station, which is different from the IAB donor, may be determined by the electronic device 100.

According to an embodiment of the present disclosure, after the serving base station is determined, the connection unit 110 may connect the electronic device 100 directly to the serving base station.

According to an embodiment of the present disclosure, after determining the serving base station, the electronic device 100 may transmit information about the serving base station to the IAB donor through the one or more IAB nodes, for the IAB donor to establish a connection with the serving base station. Here, in a case that the IAB donor has previously established a connection with the serving base station, the IAB donor does not need to perform an operation; and in a case that the IAB donor has not established a connection with the serving base station before, the IAB donor may establish a connection with the serving base station via an Xn interface. In this way, uplink and/or downlink transmission over an IAB connection is achieved.

Figure 8 is a signaling flow diagram illustrating a method of maintaining a direct connection and an IAB connection under the second architecture according to an embodiment of the present disclosure. In Figure 8, a UE may include the electronic device 100. In step S801, the LTE accesses an IAB node 1. In step S802, information about an IAB donor is transmitted from an IAB node 1 to the LTE. In step S803, the LTE determines a base station, different from the IAB donor, as a serving gNB, and the UE directly accesses the serving gNB. In step S804, information about the serving gNB is transmitted from the UE to the IAB Node 1. In step S805, receipt of the information about the serving gNB is acknowledged by the IAB node 1. In step S806, the information about the serving gNB of the UE is transmitted from the IAB node 1 to an IAB node 2. In step S807, receipt of the information about the serving gNB of the UE is acknowledged by the IAB node 2 to the IAB node 1. In step S808, the information about the serving gNB of the UE is transmitted form the IAB node 2 to the IAB donor. In step S809, receipt of the information about the serving gNB of the UE is acknowledged by the IAB donor to the IAB node 2. In step S810, an Xn interface with the serving gNB is established by the IAB donor based on the information about the serving gNB of the UE. In step S811, information about the UE is transmitted from the IAB donor to the serving gNB to notify the serving gNB of the IAB donor of the UE. In step S812, receipt of the information about the UE is acknowledged by the serving gNB to the IAB donor. Here, it is assumed that a connection has been established between the IAB node 1 and the IAB node 2, and a connection has been established between the IAB node 2 and the IAB donor. Therefore, the UE is connected to the IAB donor via the IAB Node 1 and the IAB Node 2, and is connected directly to the serving gNB. In Figure 8, in case that a connection has been established between the IAB donor and the serving gNB, step S810 may be omitted and the IAB donor directly notifies the serving gNB of the information about the UE.

As described above, according to the embodiment of the present disclosure, under the second architecture, the UE may be first connected to the IAB node serving as a parent node, and then connected to the serving gNB.

According to an embodiment of the present disclosure, the connection unit 110 may directly connect the electronic device 100 to the serving base station first.

According to an embodiment of the present disclosure, after the electronic device 100 is connected directly to the serving base station, the connection unit 110 may determine the IAB node serving as a parent node of the electronic device 100. Here, the IAB donor of the parent node is different from the serving base station. That is, the parent node may be determined by the electronic device 100. For example, the connection unit 110 may determine a suitable IAB node from surrounding IAB nodes to serve as a candidate parent node. After determining the candidate parent node, the connection unit 110 may transmit request information to the candidate parent node to request the IAB donor of the candidate parent node. In a case that it is determined that the IAB donor of the candidate parent node is different from the serving base station, the connection unit 110 may determine the candidate parent node as the parent node; and in a case that it is determined that the IAB donor of the candidate parent node is the same as the serving base station, the connection unit 110 may determine another candidate parent node repeatedly, until a parent node whose IAB donor is different from the serving base station is found.

According to an embodiment of the present disclosure, after determining the IAB node as the parent node, the connection unit 110 may connect the electronic device 100 to the IAB node serving as the parent node.

According to an embodiment of the present disclosure, after connected to the parent node, the electronic device 100 may transmit information about the serving base station to the IAB donor via the one or more IAB nodes through the communication unit 120, for the IAB donor to establish a connection with the serving base station.

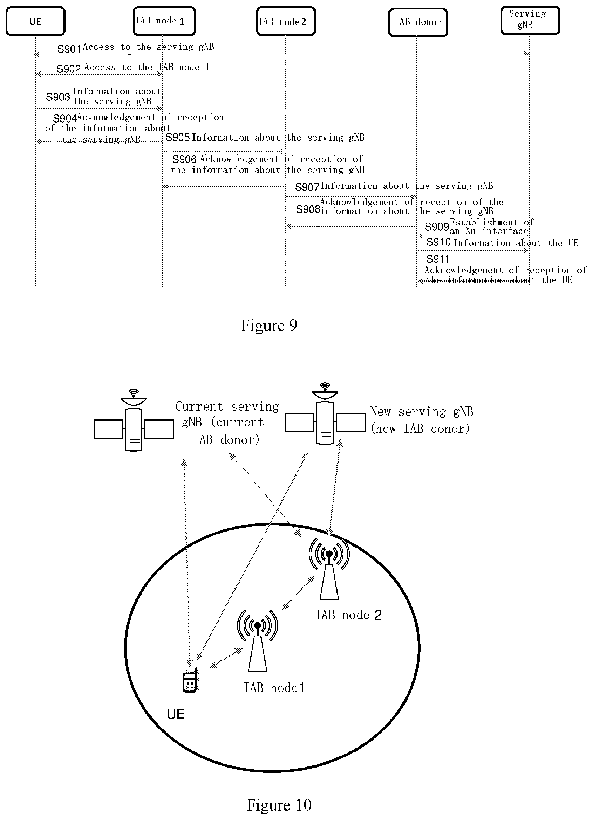

Figure 9 is a signaling flow diagram illustrating a method of maintaining a direct connection and an IAB connection under the second architecture according to an embodiment of the present disclosure. In Figure 9, a UE may include the electronic device 100. In step S901, a connection with a serving gNB is established by the UE. In step S902, an IAB node 1 whose IAB donor is not the serving gNB is determined, by the UE, as a parent node of the UE, and the UE accesses the IAB node 1. In step S903, information about the serving gNB is transmitted from the UE to the IAB Node 1. In step S904, receipted of the information about the serving gNB is acknowledged by the IAB node 1. In step S905, the information about the serving gNB of the UE is transmitted from the IAB node 1 to an IAB node 2. In step S906, receipted of the information about the serving gNB of the UE is acknowledged by the IAB node 2 to the IAB node 1. In step S907, the information about the serving gNB of the UE is transmitted from the IAB node 2 to the IAB donor. In step S908, receipt of the information about the serving gNB of the UE is acknowledged by the IAB donor to the IAB node 2. In step S909, an Xn interface with the serving gNB is established by the IAB donor based on the information about the serving gNB of the UE. In step S910, information about the UE is transmitted from the IAB donor to the serving gNB, to notify the serving gNB of the IAB donor of the UE. In step S911, receipt of the information of the UE is acknowledged by the serving gNB to the IAB donor. Here, it is assumed that a connection has been established between the IAB node 1 and the IAB node 2, and a connection has been established between the IAB node 2 and the IAB donor. Therefore, the UE is connected to the IAB donor via the IAB node 1 and the IAB node 2, and is connected directly to the serving gNB. In Figure 9, in a case that a connection has been established between the IAB donor and the serving gNB, step S909 may be omitted and the IAB donor directly notifies the serving gNB of the information about the UE.

As described above, according to the embodiment of the present disclosure, under the second architecture, the UE may be connected to the serving gNB first, and then connected to the IAB node serving as the parent node.

Methods for the electronic device 100 to establish both a direct connection and an IAB connection are described above. Under either the first architecture or the second architecture, the electronic device 100 may first establish a direct connection and then establish an IAB connection, or may first establish an IAB connection and then establish a direct connection. According to embodiments of the present disclosure, during a scanning process, the electronic device 100 may first establish an IAB connection in response to an IAB node serving as a parent node being first scanned; and the electronic device 100 may first establish a direct connection in response to a serving base station being scanned first. That is, the electronic device 100 may determine a manner of establishing both a direct connection and an IAB connection based on a scanning process. Further, when deploying a network, the network may be deployed in the first architecture or the second architecture. In addition, after the direct connection/IAB connection is established or during a process of establishing the direct connection/IAB connection, the electronic device 100 may determine whether an IAB node or a serving base station is connected based on operations of the generation unit 130 and the type determination unit 140 as described above.

According to an embodiment of the present disclosure, after establishing the direct connection and the IAB connection, the electronic device 100 may be in motion. In addition, the IAB donor and the serving base station may also be in motion in a case where the IAB donor and the serving base station are located on a non-transparent satellite device. In a case where the IAB donor and the serving base station are located at a terrestrial station connected to a transparent satellite device, the terrestrial station connected to the transparent satellite device may change due to movement of the transparent satellite device. Therefore, handover may occur. In the present disclosure, there may be handovers in the following situations. In a situation, handover occurs on the IAB donor in the IAB connection of the electronic device 100 due to movement of the IAB donor or deterioration of channel quality between the IAB donor and an IAB node. In another situation, handover occurs on the parent node in the IAB connection of the electronic device 100 due to movement of the electronic device 100 or deterioration of the channel quality between the electronic device 100 and the parent node. In yet another situation, handover occurs on the serving base station in the direct connection of the electronic device 100 due to movement of the serving base station, movement of the electronic device 100, or deterioration of channel quality between the serving base station and the electronic device 100. Several handover situations are described in detail below.

Figure 10 is a schematic diagram illustrating a scenario of handover on an IAB donor under the first architecture according to an embodiment of the present disclosure. In Figure 10, a UE may include the electronic device 100, and an IAB donor is the same as a serving gNB and is located on a non-transparent satellite device. As shown in Figure 10, the UE is connected to a current IAB donor via IAB node 1 and IAB node 2, the current IAB donor is also a current serving gNB, and the UE is directly connected to the current serving gNB. Due to movement of the satellite device or change of channel quality, handover of the IAB donor occurs, that is, the IAB donor of the LTE is changed from the current IAB donor to a new IAB donor. Here, the handover may be triggered by the IAB node 2. For example, the IAB node 2 may search for a new IAB donor when finding that a distance to the current IAB donor becomes further or a signal from the current IAB donor becomes degraded. In this process, since the network is in the first architecture, it is necessary to ensure that the new IAB host is also a new serving gNB.

Figure 10 shows a situation where an IAB donor is also a serving gNB and is located on a non-transparent satellite device. For a situation where the IAB donor is also the serving gNB and is located at a terrestrial station connected to a transparent satellite device, it is determined that no handover occurs on the IAB donor, in a case that the IAB node 2 is handed over to a new transparent satellite device which is connected to a same terrestrial station as that connected to the transparent satellite device before the handover; and it is determined that a handover occurs on the IAB donor, in a case that the IAB node 2 is handed over to a new transparent satellite device which is connected to a terrestrial station different from that connected to the transparent satellite device before the handover. That is to say, the terrestrial station connected to the transparent satellite device is the IAB donor, and it is determined whether a handover of the IAB donor occurs based on whether the terrestrial station is changed.

According to an embodiment of the present disclosure, under the first architecture, when the IAB donor changes, the electronic device 100 may receive information of the IAB donor after handover, from the IAB node that is a parent node of the electronic device 100 through the communication unit 120. Further, the connection unit 110 may determine the IAB donor after handover as a new serving gNB. Further, based on the information of the IAB donor after handover, the connection unit 110 may connect the electronic device 100 directly to the IAB donor after handover. Therefore, the electronic device 100 is connected to the IAB donor after handover via one or more IAB nodes. The IAB donor after handover is also the serving gNB after handover, and the electronic device 100 may be connected directly to the serving gNB after handover.

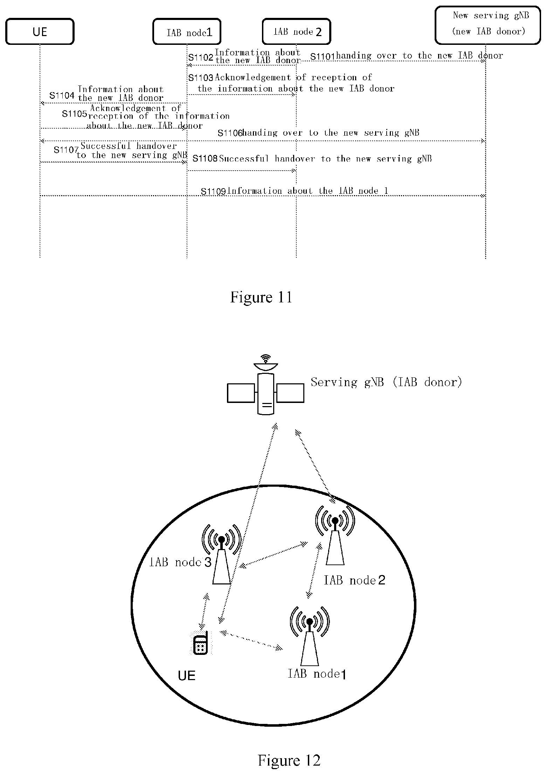

Figure 11 is a signaling flow diagram illustrating a method of performing handover on an IAB donor under the first architecture according to an embodiment of the present disclosure. As shown in Figure 11, in step S1101, an IAB node 2 is handed over to a new IAB donor. In step S 1102, information of the new IAB donor is transmitted from the IAB node 2 to the IAB node 1. In step S1103, receipt of the information of the new IAB donor is acknowledged by the IAB node 2 to an IAB node 1. In step S1104, the information of the new IAB donor is transmitted from the IAB node 1 to a UE. In step S1105, receipt of the information of the new IAB donor is acknowledged by the UE to the IAB node 1. That is, the UE is notified of the information of the new IAB donor by the IAB node directly connected to the new IAB donor through an IAB connection. In step S1106, the new IAB donor is determined, by the UE, as a new serving gNB, and the UE is directly connected to the new serving gNB. In step S1107, information indicating that the LTE is successfully handed over to the new serving gNB is transmitted from the UE to the IAB node 1. In step S1108, information indicating that the UE is successfully handed over to the new serving gNB is transmitted from the IAB node 1 to the IAB node 2. In step S1109, information of the IAB node 1 is transmitted from the LTE to the new IAB donor to notify the new IAB donor that a parent node of the new IAB donor is the IAB node 1. As a result, a handover of the IAB donor occurs, and a handover of the serving base station also occurs, since the IAB donor is also the serving base station. After the handover, the LTE still maintains both a direct connection and an IAB connection.

Figure 12 is a schematic diagram illustrating a scenario of handover on an IAB parent node under the first architecture according to an embodiment of the present disclosure. In Figure 12, a UE may include the electronic device 100, and an IAB donor is also a serving gNB and is located on a non-transparent satellite device. As shown in Figure 12, the UE is connected to the IAB donor via an IAB node 1 and an IAB node 2, the IAB donor is also a serving gNB, and the UE is connected directly to the serving gNB. Due to movement of the UE or change of channel quality, handover of a parent node of the UE may occur. The handover may be may be triggered by the UE. For example, the UE may search for a new IAB node as the parent node when finding that a distance to the IAB node 1 becomes further or signal quality from the IAB node 1 is degraded. Here, the parent node of the UE is changed from the IAB node 1 to an IAB node 3. That is, after the handover, the UE is connected to the IAB donor via the IAB node 3 and the IAB node 2. In this process, since the network is in the first architecture, it is necessary to ensure that the IAB donor of the parent node after the handover is the same as the serving gNB of the UE.

According to an embodiment of the present disclosure, the connection unit 110 may determine the IAB node serving as a parent node of the electronic device 100 after handover. Here, the IAB donor of the IAB node serving as a parent node after the handover is the same as the serving base station of the electronic device 100. Here, the connection unit 110 determines the parent node after handover in a same manner as the connection unit 110 determining the parent node to be accessed. For example, the connection unit 110 may determine a suitable IAB node from surrounding IAB nodes as a candidate parent node after handover. After determining the candidate parent node after handover, the connection unit 110 may transmit request information to the candidate parent node after handover to request the IAB donor of the candidate parent node after handover. In a case that it is determined that the IAB donor of the candidate parent node after handover is different from the serving base station, the connection unit 110 may determine the candidate parent node after handover as the parent node; and in a case that it is determined that the IAB donor of the candidate parent node after handover is the same as the serving base station, the connection unit 110 may determine another candidate parent node after handover repeated, until a parent node whose IAB donor is different from the serving base station is found.

According to an embodiment of the present disclosure, after the parent node after handover is determined, the connection unit 110 may connect the electronic device 100 to the parent node after handover. Further, the electronic device 100 may transmit information of the IAB node serving as the parent node after handover to the serving base station through the communication unit 120. Therefore, when handover of the parent node occurs, the electronic device 100 can be connected to the IAB donor via the parent node after the handover.

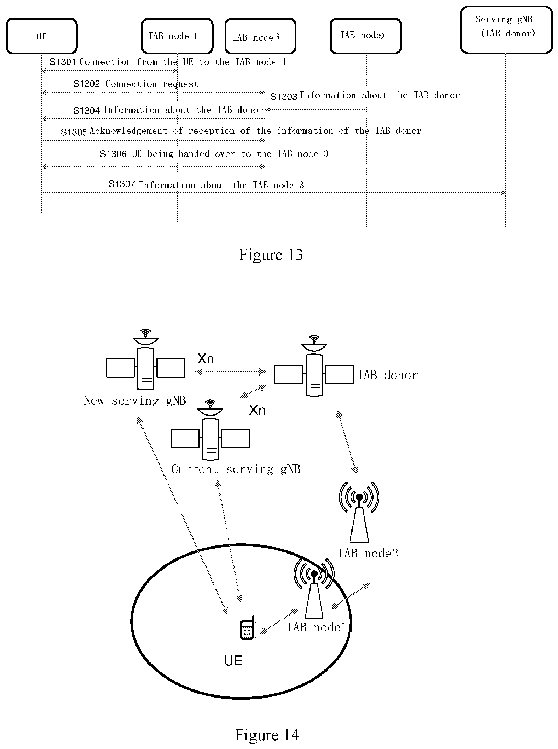

Figure 13 is a signaling flow diagram illustrating a method of performing handover on an IAB parent node under the first architecture according to an embodiment of the present disclosure. As shown in Figure 13, in step S1301, a LTE is originally connected to an IAB node 1. In step S1302, the LTE determines that handover of a parent node occurs, and determines an IAB node 3 as a candidate parent node, and a connection request information may be transmitted from the UE to the IAB node 3. Here, in a case that the IAB node 3 does not know an IAB donor of the IAB node 3, the IAB node 3 needs to request information about the IAB donor from a parent node of the IAB node 3. In step S1303, information about the IAB donor is transmitted from an IAB node 2 to the IAB node 3. Step S1303 may be omitted in a case that the IAB node 3 knows the IAB donor of the IAB node 3. In step S1304, the information about the IAB donor of the IAB node 3 is transmitted from the IAB node 3 to the UE. In step S1305, receipt of the information about the IAB donor of the IAB node 3 is acknowledged by the UE to the IAB node 3, and the UE determines that the IAB donor of the IAB node 3 is the same as a serving gNB of the LTE. In step S1306, the UE is handed over to the IAB node 3. In step S1307, information of the IAB node 3 is transmitted from the LTE to the IAB donor, so as to notify the IAB donor that the parent node of the UE is changed to the IAB node 3. Here, the UE may determine an appropriate parent node after handover by receiving information of the IAB donor of the IAB node from the IAB node and determining whether the IAB donor is the same as the serving gNB of the UE. Alternatively, the UE may carry information of the serving gNB of the LTE in the connection request information, so that the IAB node 3 may determine whether the serving gNB is the same as the IAB donor of the IAB node 3. In a case that the serving gNB of the UE is the same as the IAB donor of the IAB node 3, the IAB node 3 may transmit, to the UE, information allowing an access; and in a case that the serving gNB of the UE is different from the IAB donor of the IAB node 3, the IAB node 3 may transmit, to the UE, information denying an access. Therefore, after handover of the parent node of the UE, the UE may be connected to the IAB donor via the new parent node.

Figure 14 is a schematic diagram illustrating a scenario of handover of a serving base station under the second architecture according to an embodiment of the present disclosure. In Figure 14, a LTE may include the electronic device 100, each of the IAB donor and the serving gNB of the UE is located on a non-transparent satellite device, and the IAB donor is different from the serving gNB. As shown in Figure 14, the UE is connected to the IAB donor via an IAB node 1 and an IAB node 2, and is connected directly to a current serving gNB, where the current serving gNB is connected to the IAB donor through an Xn interface. Due to movement of the serving gNB or change of channel quality, the LTE needs to be handed over to a new serving gNB. This process may be triggered by the UE. For example, the UE may search for a new serving gNB when the UE finds that a distance to the current serving gNB becomes further or a signal from the current serving gNB becomes degraded. Since the network is in the second architecture, it is necessary to establish a connection between the new serving gNB and the IAB donor through an Xn interface.

Figure 14 shows a situation where the serving gNB is located on a non-transparent satellite device. For a situation where the serving gNB is located at a terrestrial station connected to the transparent satellite device, it is determined that no handover occurs on the serving gNB, in a case that the transparent satellite device connected to the LTE is changed to a new transparent satellite device which is connected to a terrestrial station same as the terrestrial station connected to the transparent satellite device before the handover; and it is determined that a handover occurs on the serving gNB, in a case that the transparent satellite device connected to the UE is changed to a new transparent satellite device which is connected to a terrestrial station different from the terrestrial station connected to the transparent satellite device before the handover. That is to say, the terrestrial station connected to the transparent satellite device is the serving gNB of the UE, and it is determined whether a handover of the serving gNB occurs based on whether the terrestrial station is changed.

According to an embodiment of the present disclosure, the connection unit 110 may determine a serving base station after handover. For example, the electronic device 100 may determine the new serving base station based on signal quality of surrounding serving base stations. After the serving base station after handover is determined, the connection unit 110 may connect the electronic device 100 directly to the serving base station after handover.

According to an embodiment of the present disclosure, information of the serving base station after handover may be transmitted from the electronic device 100 through the communication unit 120 via one or more IAB nodes to the IAB donor, so as to be used for establishing a connection between the IAB donor and the serving base station after handover.

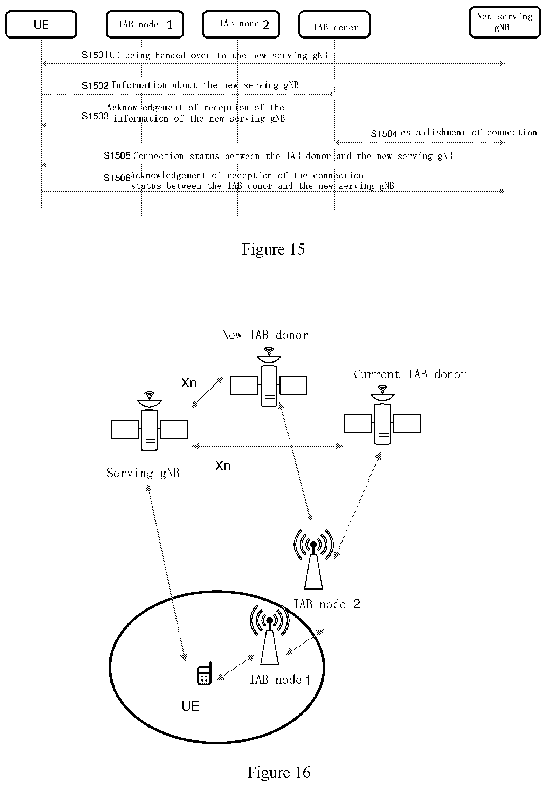

Figure 15 is a signaling flow diagram illustrating a method of performing handover of a serving base station under the second architecture according to an embodiment of the present disclosure. As shown in Figure 15, in step S1501, the UE is handed over to a new serving gNB. In step S1502, information about a new serving gNB is transmitted from the UE to the IAB donor via an IAB node 1 and an IAB node 2. In step S1503, receipt of the information about the new serving gNB is acknowledged by the IAB donor to the UE. In step S1504, the IAB donor establishes a connection with the new serving gNB. In step S1505, a connection status between the IAB donor and the new serving gNB is transmitted from the new serving gNB to the UE, indicating that a connection is established between the IAB donor and the new serving gNB. In step S 1506, receipt of the connection status between the IAB donor and the new serving gNB is acknowledged by the UE to the new serving gNB. Therefore, the UE is handed over to the new serving gNB, and a connection between the new serving gNB and the IAB donor is established.

Figure 16 is a schematic diagram illustrating a scenario of handover of an IAB donor under the second architecture according to an embodiment of the present disclosure. In Figure 16, a UE may include the electronic device 100, each of the IAB donor and the serving gNB of the LTE is located on a non-transparent satellite device, and the IAB donor is different from the serving gNB. As shown in Figure 16, the LTE is connected to a current IAB donor via an IAB node 1 and an IAB node 2, and the UE is connected directly to the serving gNB, where the serving gNB and the current IAB donor are connected through an Xn interface. Due to movement of the IAB donor or change in channel quality, the IAB node 2 is handed over to a new IAB donor. This process may be triggered by the IAB node 2. For example, the IAB node 2 may search for a new IAB donor when the IAB node 2 finds that a distance to the current IAB donor becomes further or signal quality from the current IAB donor is degraded. In this process, since the network is in the second architecture, it is necessary to ensure that a connection is established between the serving gNB and the new IAB donor.

Figure 16 shows a situation where the IAB donor is located on a non-transparent satellite device. For a situation where the IAB donor is located at a terrestrial station connected to a transparent satellite device, it is determined that no handover of an IAB donor occurs, in a case that the transparent satellite device connected to an IAB node 2 is changed to a new transparent satellite device which is connected to a terrestrial station the same as the terrestrial station connected to the transparent satellite device before the handover; and it is determined that a handover of the IAB donor occurs, in a case that the transparent satellite device connected to the IAB node 2 is changed to a new transparent satellite device which is connected to a terrestrial station different from the terrestrial station connected to the transparent satellite device before the handover. That is to say, the terrestrial station connected to the transparent satellite device is the IAB donor, and it is determined whether a handover of the IAB donor occurs based on whether the terrestrial station is changed.

According to an embodiment of the present disclosure, when the IAB donor is changed, the electronic device 100 may receive, through the communication unit 120, information of the IAB donor after handover from the IAB node serving as a parent node of the electronic device 100.

According to an embodiment of the present disclosure, the electronic device 100 may transmit the information of the IAB donor after handover to the serving base station through the communication unit 120 by using a direct connection with the serving base station, so that the serving base station can establish a connection with the IAB donor after handover.

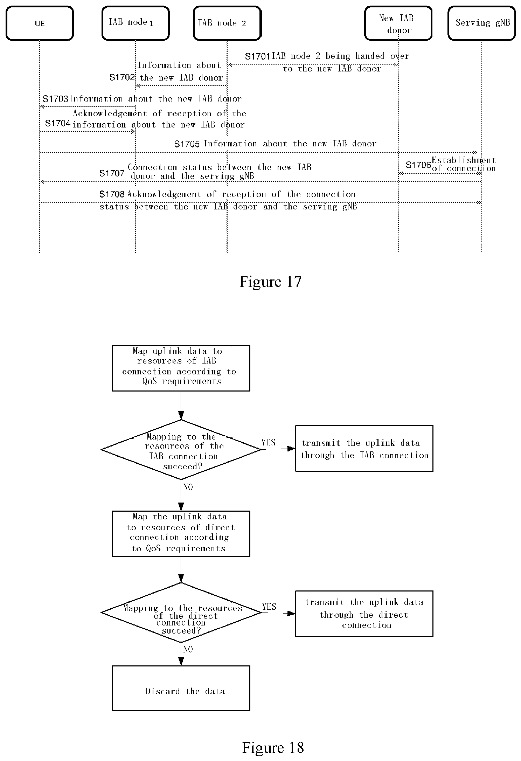

Figure 17 is a signaling flow diagram illustrating a method of performing handover of an IAB donor under the second architecture according to an embodiment of the present disclosure. As shown in Figure 17, in step S1701, an IAB node 2 is handed over to a new IAB donor. In step S1702, information about the new IAB donor is transmitted from the IAB node 2 to an IAB node 1. In step S1703, the information about the new IAB donor is transmitted from the IAB node 1 to a UE. In step S1704, receipt of the information about the new IAB donor is acknowledged by the LTE. In step S1705, the information about the new IAB donor is transmitted from the UE directly to the serving gNB. In step S1706, a connection with the new IAB donor is established by the serving gNB based on the information about the new IAB donor. In step S1707, a connection status between the new IAB donor and the serving gNB is transmitted from the serving gNB to the LTE, indicating that a connection is established between the new IAB donor and the serving gNB. In step S 1708, receipt of the connection status between the new IAB donor and the serving gNB is acknowledged by the LTE to the serving gNB. Therefore, the LTE is handed over to the new IAB donor, and a connection between the serving gNB and the new IAB donor is established.

As mentioned above, handover of an IAB donor under the first architecture, handover of a parent node under the first architecture, handover of a serving base station under the second architecture, and handover of an IAB donor under the second architecture are described. In any of the above situations, the UE can still maintain both a direct connection and an IAB connection after the handover.

According to the embodiments of the present disclosure, the direct connection and the IAB connection can both provide uplink transmission and downlink transmission. That is, according to the embodiments of the present disclosure, any one of the following transmission modes may be adopted: using the IAB connection for transmission of both uplink data and downlink data; using the direct connection for transmission of both uplink data and downlink data; using the IAB connection for transmission of uplink data and using the direct connection for transmission of downlink data; using the direct connection for transmission uplink data and using the IAB connection for transmission of downlink data.

As shown in Figure 1, according to an embodiment of the present disclosure, the electronic device 100 may further include a selection unit 150 configured to select a connection for transmission of uplink data, that is, to determine whether to use an IAB connection or a direct connection to transmit uplink data.

According to an embodiment of the present disclosure, the selection unit 150 may preferentially select the IAB connection for transmitting uplink data. That is, the IAB connection is a default mode for transmitting uplink data.

According to an embodiment of the present disclosure, the selection unit 150 may determine whether there is a resource suitable for transmitting uplink data in the IAB connection. Further, in a case that there is the resource suitable for transmitting uplink data in the IAB connection, the selection unit 150 may use the IAB connection for transmission of uplink data.

In the IAB connection, an IAB donor or a parent node of the electronic device 100 may allocate resources to the electronic device 100 for transmitting uplink data through the IAB connection. A situation in which there are resources suitable for transmitting uplink data in the IAB connection may include that: resources for transmitting uplink data through the IAB connection are allocated by the IAB donor or the parent node to the electronic device 100, and the electronic device 100 is able to map the uplink data on suitable resources under QoS requirements. That is, resources for transmitting uplink data exist in the IAB connection and meet the QoS requirements of the electronic device 100. In this case, the selection unit 150 may utilize the IAB connection for transmission of the uplink data.

According to an embodiment of the present disclosure, in a case that there is no resource suitable for transmitting uplink data in the IAB connection, the selection unit 150 may determine to use a direct connection for transmitting uplink data. Alternatively, the selection unit 150 may determine whether there are resources suitable for transmitting uplink data in the direct connection. A situation in which there are resources suitable for transmitting uplink data in the direct connection may include that: resources for transmitting uplink data through the direct connection are allocated by the serving base station to the electronic device 100, and the electronic device 100 is able to map the uplink data on suitable resources under QoS requirements. That is, resources for transmitting uplink data exist in the direct connection and meet the QoS requirements of the electronic device 100. In this case, the selection unit 150 may utilize the direct connection for transmission of the uplink data.

According to an embodiment of the present disclosure, in a case that there is no resource suitable for transmitting uplink data in the direct connection, the electronic device 100 may discard the uplink data.

Figure 18 is a schematic diagram illustrating a method of transmitting uplink data in a network in which a direct connection and an IAB connection are both maintained, according to an embodiment of the present disclosure. As shown in Figure 18, in a case that there is uplink data to be transmitted from the electronic device 100, the electronic device 100 maps the uplink data to resources of the IAB connection according to QoS requirements. Next, the electronic device 100 determines whether the uplink data is successfully mapped to the resources of the IAB connection. In a case that the uplink data is successfully mapped to the resources of the IAB connection, the electronic device 100 transmits the uplink data through the IAB connection. In a case that the uplink data is not successfully mapped to the resources of the IAB connection, the electronic device 100 maps the uplink data to the resources of the direct connection based on the QoS requirements. Next, the electronic device 100 determines whether the uplink data is successfully mapped to the resources of the direct connection. In a case that the uplink data is successfully mapped to the resources of the direct connection, the electronic device 100 transmits the uplink data through the direct connection. In a case that the uplink data is not successfully mapped to the resources of the direct connection, the electronic device 100 discards the data.

As described above, according to the embodiments of the present disclosure, the electronic device 100 can flexibly select either an IAB connection or a direct connection to transmit uplink data. Further, the electronic device 100 can use the IAB connection by default, so as to maximize cell coverage and reduce energy consumption. In a case that the IAB connection cannot meet a QoS requirement, the direct connection may be used to reduce delay and ensure the QoS requirement.

As can be seen, according to the embodiments of the present disclosure, two network architectures are proposed. In a first architecture, an IAB donor is also a serving base station; while in a second architecture, the IAB donor is different from the serving base station. Further, the electronic device 100 may maintain both an IAB connection and a direct connection. The electronic device 100 may determine, by transmitting request information, whether a device connected to the electronic device 100 is an IAB node or the serving base station. In addition, in a case of handover of the IAB donor, or handover of the serving base station, or handover of a parent node occurs, both the IAB connection and the direct connection may still be maintained. In this way, the electronic device 100 can flexibly select either the IAB connection or the direct connection for transmitting uplink data, so that advantages of both the direct connection and the IAB connection are taken, and requirements on network delay and energy saving are both satisfied.

### <3. Configuration example of a base station device>

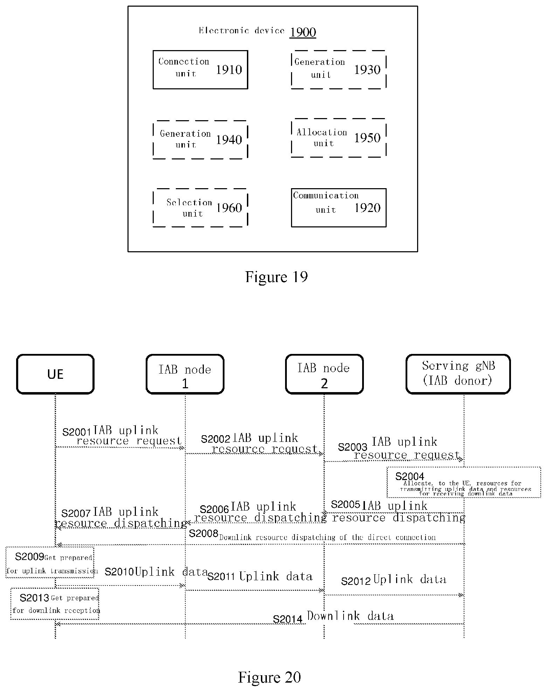

Figure 19 is a block diagram illustrating a structure of an electronic device 1900 in a wireless communication system according to an embodiment of the present disclosure. The electronic device 1900 here may serve as a network side device, specifically a base station device.

As shown in Figure 19, the electronic device 1900 may include a connection unit 1910 and a communication unit 1920.

Here, each unit of the electronic device 1900 may be included in processing circuitry. It should be noted that the electronic device 1900 may include a single processing circuit or multiple processing circuits. Further, the processing circuitry may include various discrete functional units to perform various different functions and/or operations. It should be noted that these functional units may be physical entities or logical entities, and units with different names may be implemented by a same physical entity.

According to an embodiment of the present disclosure, the connection unit 1910 may be configured to connect the electronic device 1900 directly to a UE (user equipment) serviced by the electronic device 1900. Here, the user equipment is also connected to an IAB donor via one or more IAB nodes.

According to an embodiment of the present disclosure, the electronic device 1900 may transmit downlink data through the communication unit 1920 using either an IAB connection between the user equipment and the IAB donor or a direct connection between the user equipment and the electronic device 1900, and receive uplink data through the IAB connection or the direct connection.

As described above, since the electronic device 1900 according to the embodiments of the present disclosure can maintain both a direct connection and an IAB connection, the electronic device 1900 can flexibly select a mode of transmitting downlink data, so that advantages of both the direct connection and the IAB connection may be utilized, and requirement on network delay and energy saving may be satisfied.

According to an embodiment of the present disclosure, the electronic device 1900 may receive request information from the user equipment through the communication unit 1920, where the request information is used for requesting identification information or type information of the electronic device 1900.

According to an embodiment of the present disclosure, as shown in Figure 19, the electronic device 1900 may further include a generation unit 1930 configured to generate response information, where the response information includes identification information or type information of the electronic device 1900. Further, the electronic device 1900 may transmit the response information to the user equipment through the communication unit 1920. In this way, the user equipment can determine whether the electronic device 1900 is a serving base station or an IAB node based on the identification information or type information of the electronic device 1900.

As mentioned above, under the first architecture, the electronic device 1900 is also an IAB donor of the user equipment. Under the second architecture, the electronic device 1900 is different from an IAB donor of the user equipment.

According to an embodiment of the present disclosure, as shown in Figure 19, the electronic device 1900 may further include a generation unit 1940. Under the first architecture, after the electronic device 1900 is directly connected to the user equipment, the generation unit 1940 may generate recommendation information about an IAB node as a parent node of the user equipment. For example, the electronic device 1900 may determine the IAB node recommended as the parent node based on a location of the IAB node and/or an available bandwidth of the IAB node. As an example, the electronic device 1900 may determine the IAB node closest to the user equipment as a recommended parent node, or may determine the IAB node with a largest available bandwidth as the recommended parent node. Further, the generation unit 1940 may include identification information of the recommended parent node in the recommendation information, and transmit the recommendation information to the user equipment through the communication unit 1920. Therefore, the user equipment can determine the parent node to be connected thereto based on the recommendation information.

According to an embodiment of the present disclosure, under the second architecture, the connection unit 1910 may establish a connection with an IAB donor. Here, the electronic device 1900 may determine, based on notification information from the IAB donor, that the IAB donor serves as an IAB donor of the user equipment. For example, the notification information may include identification information of the user equipment, so that the electronic device 1900 may determine that the user equipment is in an IAB connection with the IAB donor.

Here, the implementation in which the electronic device 1900 is in a connection with the user equipment and is also in an IAB connection is described in detail above, and is not repeated here.

According to the embodiments of the present disclosure, in a case where the user equipment has only one radio frequency for uplink transmission and downlink transmission, that is, the user equipment works in a half-duplex manner, the user equipment may use an IAB connection for transmitting uplink data, and use a direct connection for receiving downlink data. In this way, the user equipment may use one or more IAB nodes to transmit uplink data, so that power consumption of the user equipment may be greatly reduced. On another hand, the user equipment receives downlink data through the direct connection, which can greatly reduce delay. In this case, since the user equipment cannot receive data and transmit data simultaneously, resources used by the user equipment for transmitting uplink data and resources used for receiving downlink data need to be time orthogonal.

According to an embodiment of the present disclosure, as shown in Figure 19, the electronic device 1900 may further include an allocation unit 1950 configured to allocate resources to a user equipment for receiving downlink data. Alternatively, in a case that the electronic device 1900 is also an IAB donor, the IAB donor needs to allocate resources to the user equipment for transmitting uplink data, and therefore the allocation unit 1950 may further be configured to allocate resources to the user equipment for transmitting uplink data.

According to an embodiment of the present disclosure, under the first architecture, the allocation unit 1950 may allocate, to the user equipment, resources for transmitting uplink data and resources for receiving downlink data, where the resources for transmitting uplink data and resources for receiving downlink data are time orthogonal to each other.

According to an embodiment of the present disclosure, when the user equipment needs to transmit uplink data, the user equipment may transmit an uplink resource request to the IAB donor via one or more IAB nodes to request resources for transmitting uplink data. In the electronic device 1900 serving as the IAB donor, the allocation unit 1950 may allocate resources for transmitting uplink data in an IAB connection to the user equipment in response to the uplink resource request from the user equipment. When the electronic device 1900 needs to transmit downlink data, the allocation unit 1950 may allocate resources for receiving downlink data in a direct connection to the user equipment. Here, since the user equipment is in a half-duplex working mode, it is necessary to ensure that the resources for transmitting uplink data and the resources for receiving downlink data are time orthogonal to each other when allocating the resources for transmitting uplink data in the IAB connection and the resources for receiving downlink data in the direct connection by the allocation unit 1950 to the user equipment.

Figure 20 is a signaling flow diagram illustrating a method for coordinating uplink resources and downlink resources under the first architecture according to an embodiment of the present disclosure. In Figure 20, a serving gNB (IAB donor) may include the electronic device 1900. As shown in Figure 20, in step S2001, an uplink resource request of an IAB connection is transmitted from the LTE to an IAB node 1, requesting uplink resource for transmitting uplink data through the IAB connection. In step S2002, the IAB uplink resource request of the UE is forwarded from the IAB node 1 to an IAB node 2. In step S2003, the IAB uplink resource request of the UE is forwarded from the IAB node 2 to the IAB donor. In step S2004, the IAB donor allocate, to the LTE, resources for transmitting uplink data in consideration of resources for receiving downlink data through a direct connection, where the resources for transmitting uplink data and the resources for receiving downlink data are time orthogonal to each other. In step S2005, an IAB uplink resource dispatching is transmitted from the IAB donor to the IAB node 2, including the resources allocated to the LTE for transmitting uplink data through the IAB connection. In step S2006, the IAB uplink resource dispatching of the UE is forwarded from the IAB node 2 to the IAB node 1. In step S2007, the IAB uplink resource dispatching of the UE is forwarded from the IAB node 1 to the UE. In step S2008, a downlink resource dispatching of the direct connection is transmitted from a serving gNB to the LTE, including the resources for the LTE to receive downlink data through the direct connection. In step S2009, the UE gets prepared to transmit uplink data. In step S2010, the uplink data is transmitted to the IAB node 1 by the UE using the received IAB uplink resource dispatching. In step S2011, the uplink data of the UE is forwarded from the IAB node 1 to the IAB node 2. In step S2012, the uplink data of the UE is forwarded from the IAB node 2 to the IAB donor. In step S2013, the LTE get prepared to receive downlink data. In step S2014, the downlink data is transmitted from the serving gNB to the UE through the direct connection. In this way, the resources of the LTE for transmitting uplink data and resources of the UE for receiving downlink data are coordinated by the serving gNB (IAB donor).

According to an embodiment of the present disclosure, under the second architecture, the electronic device 1900 receives, through the communication unit 1920, resources allocated by an IAB donor to a LTE for transmitting uplink data. Further, the allocation unit 1950 allocates resources to the LTE for receiving downlink data, such that the resources for transmitting uplink data and the resources for receiving downlink data are time orthogonal to each other.

According to an embodiment of the present disclosure, under the second architecture, the electronic device 1900 is different from an IAB donor. The user equipment sends uplink data through the IAB connection, and therefore the IAB donor allocates resources to the user equipment for sending the uplink data. When the electronic device 1900 needs to send downlink data, the allocation unit 1950 may allocate resources to the user equipment for receiving downlink data in the direct connection. Here, since the user equipment is in a half-duplex working mode, it is necessary to ensure that the resources for receiving downlink data and the resources received from the IAB donor for sending uplink data are time orthogonal to each other, when the allocation unit 1950 allocating resources to the user equipment for receiving downlink data in the direct connection.

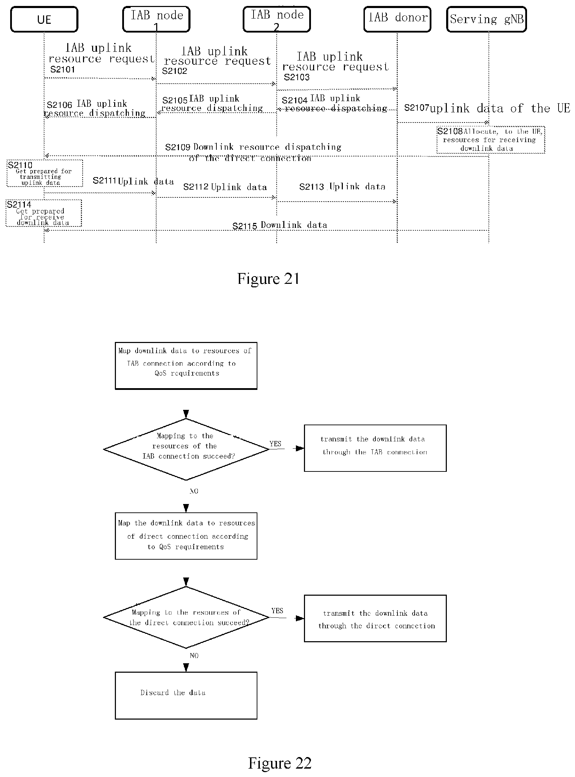

Figure 21 is a signaling flow diagram illustrating a method for coordinating uplink resources and downlink resources under the second architecture according to an embodiment of the present disclosure. In Figure 21, a serving gNB may include the electronic device 1900. As shown in Figure 21, in step S2101, a LTE sends an uplink resource request of an IAB connection to an IAB node 1, in order to request uplink resources for sending uplink data through an IAB connection. In step S2102, the IAB node 1 forwards the IAB uplink resource request of the UE to an IAB node 2. In step S2103, the IAB node 2 forwards the IAB uplink resource request of the UE to an IAB donor. In step S2104, the IAB donor sends, to the IAB node 2, an IAB uplink resource dispatching including the resources allocated to the LTE for sending uplink data through the IAB connection. In step S2105, the IAB node 2 forwards, to the IAB node 1, the IAB uplink resource dispatching of the UE. In step S2106, the IAB node 1 forwards, to the UE, the IAB uplink resource dispatching of the UE. In step S2107, the IAB donor sends, to a serving gNB, resources allocated to the UE for sending uplink data. In step S2108, the serving gNB allocates, based on the received resources of the UE for sending uplink data, resources to the LTE for receiving downlink data through a direct connection, such that the resources for receiving downlink data and the resources for sending uplink data are time orthogonal to each other. In step S2109, the serving gNB sends, to the LTE, a downlink resource dispatching of the direct connection, including the resources for the UE to receive downlink data through the direct connection. In step S2110, the UE is prepared to send uplink data. In step S2111, the UE sends the uplink data to the IAB node 1 using the received IAB uplink resource dispatching. In step S2112, the IAB node 1 forwards the uplink data of the UE to the IAB node 2. In step S2113, the IAB node 2 forwards the uplink data of the UE to the IAB donor. In step S2114, the UE is prepared to receive downlink data. In step S2115, the serving gNB sends downlink data to the UE through the direct connection. In this way, the resources of the LTE for sending uplink data and resources of the LTE for receiving downlink data are coordinated by the serving gNB and the IAB donor.

As described above, according to the embodiments of the present disclosure, for the user equipment in a half-duplex working mode, the IAB connection may be used to send uplink data and the direct connection may be used to receive downlink data. Further, the electronic device 1900, or the electronic device 1900 and the IAB donor can coordinate the resources of the user equipment for sending uplink data and the resources for receiving downlink data, so that the resources for sending uplink data and the resources for receiving downlink data are time orthogonal to each other. In this way, power consumption of the user equipment may be saved, and delay of downlink data may be reduced.

According to the embodiment of the present disclosure as shown in Figure 19, the electronic device 1900 may further include a selection unit 1960 configured to select a connection for sending downlink data, that is, to determine whether to send downlink data through an IAB connection or a direct connection.

According to an embodiment of the present disclosure, the selection unit 1960 may preferentially select the IAB connection for sending downlink data. That is, the IAB connection is a default way of sending downlink data.

According to an embodiment of the present disclosure, the selection unit 1960 may determine whether there are resources suitable for sending downlink data in the IAB connection. Further, in a case that there are resources suitable for sending downlink data in the IAB connection, the selection unit 1960 may select the IAB connection for sending downlink data.

A situation in which there are resources in the IAB connection suitable for transmitting downlink data may include that: resources for receiving downlink data through the IAB connection are allocated to the user equipment by the IAB donor or the parent node, and the electronic device 1900 is able to map the downlink data to appropriate resources under QoS requirements. That is, resources for transmitting downlink data exist in the IAB connection and meet the QoS requirements. In this case, the selection unit 1960 may transmit downlink data through the IAB connection.

According to an embodiment of the present disclosure, in a case that there is no resource suitable for sending downlink data in the IAB connection, the selection unit 1960 may determine to use a direct connection for sending downlink data. Alternatively, the selection unit 1960 may determine whether there are resources suitable for sending downlink data in the direct connection. A situation in which there are resources suitable for transmitting downlink data in the direct connection may include that: resources for receiving downlink data through the direct connection are allocated by the electronic device 1900 to the user equipment, and the electronic device 1900 is able to map the downlink data to appropriate resources under QoS requirements. That is, resources for sending downlink data exist in the direct connection and meet the QoS requirements. In this case, the selection unit 1960 may use the direct connection for sending downlink data.

According to an embodiment of the present disclosure, in a case that there is no resource suitable for sending downlink data in the direct connection, the electronic device 1900 may discard the uplink data.

Figure 22 is a schematic diagram illustrating a method of transmitting downlink data in a network in which a direct connection and an IAB connection are both maintained, according to an embodiment of the present disclosure. As shown in Figure 22, in a case that there is downlink data to be sent from the electronic device 1900, the electronic device 1900 maps the downlink data to resources of the IAB connection according to QoS requirements. Next, the electronic device 1900 determines whether the downlink data is successfully mapped to the resources of the IAB connection. If the downlink data is successfully mapped to the resources of the IAB connection, the electronic device 1900 sends the downlink data through the IAB connection. In a case that the downlink data is not successfully mapped to the resources of the IAB connection, the electronic device 1900 maps the downlink data to the resources of the direct connection based on the QoS requirements. Next, the electronic device 1900 determines whether the downlink data is successfully mapped to the resources of the direct connection. In a case that the downlink data is successfully mapped to the resources of the direct connection, the electronic device 1900 sends the downlink data through the direct connection. In a case that the downlink data is not successfully mapped to the resources of the direct connection, the electronic device 1900 discards the data.

As described above, according to the embodiments of the present disclosure, the electronic device 1900 can flexibly select either an IAB connection or a direct connection to send downlink data. Further, the electronic device 1900 can use the IAB connection by default, so as to maximize cell coverage and reduce energy consumption. In a case that the IAB connection cannot meet a QoS requirement, the direct connection may be used to reduce delay and ensure the QoS requirement.

As described above, according to the embodiments of the present disclosure, two network architectures are proposed. In the first architecture, an IAB donor is also the electronic device 1900; while in the second architecture, the IAB donor is different from the electronic device 1900. Further, the user equipment can maintain both an IAB connection and a direct connection. In addition, the electronic device 1900 can flexibly select from the IAB connection and the direct connection to send downlink data, so that advantages of both the direct connection and the IAB connection can be utilized, and requirements on network delay and energy saving are both satisfied. Further, when the user equipment is in a half-duplex working mode, the electronic device 1900 may perform resource coordination so that resources of the user equipment for sending uplink data and the resources of the user equipment for receiving downlink data are time orthogonal to each other, and therefore energy consumption of the user equipment may be reduced and delay of downlink transmission may be reduced.

### <4. Method embodiments>

A wireless communication method performed by an electronic device 100 serving as a user equipment in a wireless communication system according to an embodiment of the present disclosure will be described in detail below.

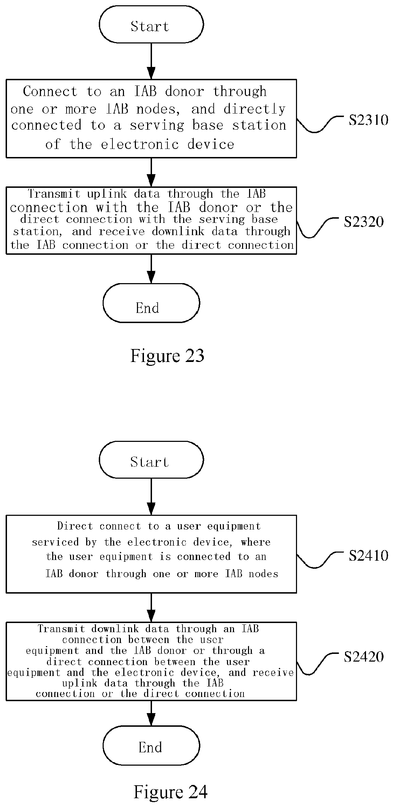

Figure 23 is a flowchart illustrating a wireless communication method performed by the electronic device 100 serving as a user equipment in a wireless communication system according to an embodiment of the present disclosure.

As shown in Figure 23, in step S2310, the electronic device 100 is connected to an IAB donor through one or more IAB nodes, and directly connected to a serving base station of the electronic device 100.

Next, in step S2320, uplink data is transmitted through the IAB connection with the IAB donor or the direct connection with the serving base station, and downlink data is received through the IAB connection or the direct connection.

In a preferred embodiment, the wireless communication method further includes: sending request information to the serving base station; receiving response information from the serving base station, where the response information includes identification information or type information of the serving base station; and determining, based on the identification information or type information of the serving base station, whether the serving base station is a serving base station or an IAB node.

In preferred embodiment, the wireless communication method further includes: sending request information to an IAB node that is a parent node of the electronic device; receiving response information from the parent node, where the response information includes identification information or type information of the parent node; determining, based on the identification information or type information, whether the parent node is the serving base station or the IAB node.

In a preferred embodiment, the serving base station is also the IAB donor.

In a preferred embodiment, the wireless communication method further includes: after connected to the IAB donor through one or more IAB nodes, receiving information of the IAB donor from the IAB node that is a parent node of the electronic device 100; and directly connecting to the IAB donor based on the information of the IAB donor.

In a preferred embodiment, the wireless communication method further includes: after directly connected to the serving base station, receiving, from the serving base station, recommendation information about an IAB node as a parent node of the electronic device 100; determining the IAB node serving as a parent node based on the recommendation information; and connecting to the IAB node serving as the parent node.

In a preferred embodiment, the wireless communication method further includes: in a case that the IAB donor changes, receiving information of the IAB donor after handover from the IAB node serving as a parent node of the electronic device 100; and connecting directly to the IAB donor after handover based on the information of the IAB donor after handover.

In a preferred embodiment, the wireless communication method further includes: determining the IAB node after handover that serves as a parent node of the electronic device 100, where the IAB donor of the IAB node after handover that serves as a parent node is the same as the serving base station; connecting to the IAB node after handover that serves as a parent node; and sending, to the serving base station, information of the IAB node after handover that serves as a parent node.

In a preferred embodiment, the serving base station is different from the IAB donor.

In a preferred embodiment, the wireless communication method further includes: after connected to the IAB donor through one or more IAB nodes, receiving information of the IAB donor from the IAB node that is a parent node of the electronic device 100; determining, based on the information of the IAB donor, the serving base station different from the IAB donor; and connecting directly to the serving base station.

In a preferred embodiment, the wireless communication method further includes: after connected directly to the serving base station, determining an IAB node that serves as a parent node of the electronic device 100, where the IAB donor of the parent node is different from the serving base station; and connecting to the IAB node that serves as a parent node.

In a preferred embodiment, the wireless communication method further includes: sending information of the serving base station to the IAB donor through the one or more IAB nodes, for the IAB donor to establish a connection with the serving base station.

In a preferred embodiment, the wireless communication method further includes: determining a serving base station after handover; connecting directly to the serving base station after handover; and sending information of the serving base station after handover to the IAB donor through one or more IAB nodes, for the IAB donor to establish a connection with the serving base station after handover.

In a preferred embodiment, the wireless communication method further includes: in a case that the IAB donor changes, receiving information of the IAB donor after handover from the IAB node that is a parent node of the electronic device 100; and sending the information of the IAB donor after handover to the serving base station, for the serving base station to establish a connection with the IAB donor after handover.

In a preferred embodiment, the wireless communication method further includes: sending uplink data through the IAB connection in a case that there is a resource suitable for sending the uplink data in the IAB connection; and sending the uplink data through the direct connection in a case that there is no resource suitable for sending the uplink data in the IAB connection.

In a preferred embodiment, the IAB donor includes a non-transparent satellite device, or a terrestrial station connected to a transparent satellite device, and the serving base station includes a non-transparent satellite device, or a terrestrial station connected to a transparent satellite device.

According to an embodiment of the present disclosure, the above method may be performed by the electronic device 100 according to any of the embodiments of the present disclosure, and therefore all the foregoing embodiments about the electronic device 100 are applicable to the method.

A wireless communication method performed by an electronic device 1900 serving as a base station device in a wireless communication system according to an embodiment of the present disclosure is described in detail below.

Figure 24 is a flowchart illustrating a wireless communication method performed by an electronic device 1900 serving as a base station in a wireless communication system according to an embodiment of the present disclosure.

As shown in Figure 24, in step S2410, the electronic device 1900 is directly connected to a user equipment serviced by the electronic device 1900, where the user equipment is connected to an IAB donor through one or more IAB nodes.

Next, in step S2420, downlink data is transmitted by using an IAB connection between the user equipment and the IAB donor or a direct connection between the user equipment and the electronic device 1900, and uplink data is received by using the IAB connection or the direct connection.

In a preferred embodiment, the wireless communication method further includes: receiving request information from the user equipment; and sending response information to the user equipment, where the response information includes identification information or type information of the electronic device 1900, for the user equipment to determine, based on the identification information or type information of the electronic device 1900, whether the electronic device 1900 is a serving base station or an IAB node.

In a preferred embodiment, the electronic device 1900 serves as the IAB donor.

In a preferred embodiment, the wireless communication method further includes: after connected directly to the user equipment, sending, to the user equipment, recommendation information about an IAB node as a parent node of the user equipment.

In a preferred embodiment, the wireless communication method further includes: allocating, to the user equipment, resources for sending uplink data and resources for receiving downlink data, so that the resources for sending uplink data and the resources for receiving downlink data are time orthogonal to each other.

In a preferred embodiment, the electronic device 1900 is different from the IAB donor.

In a preferred embodiment, the wireless communication method further includes: establishing a connection with the IAB donor; and determining, based on notification information from the IAB donor, that the IAB donor of the user equipment is the IAB donor.

In a preferred embodiment, the wireless communication method further includes: receiving, from the IAB donor, resources for sending uplink data allocated by the IAB donor to the user equipment; and allocating, to the user equipment, resources for receiving downlink data, where the resources for sending uplink data and the resources for receiving downlink data are time orthogonal to each other.

In a preferred embodiment, the wireless communication method further includes: transmitting downlink data through the IAB connection in a case that there are resources suitable for transmitting downlink data in the IAB connection; and transmitting downlink data through the direct connection in a case that there is no resource suitable for transmitting downlink data in the IAB connection.

In a preferred embodiment, the IAB donor includes a non-transparent satellite device or a terrestrial station connected to a transparent satellite device, and the electronic device 1900 includes a non-transparent satellite device or a terrestrial station connected to a transparent satellite device.

According to the embodiments of the present disclosure, the method may be performed by the electronic device 1900 according to the embodiments of the present disclosure, and therefore all the embodiments about the electronic device 1900 are applicable to thereto.

### <5. Application example>

The technology of the present disclosure is applicable to various products.

A network side device may be implemented as any type of base station device, such as a macro eNB or a small eNB, and may be implemented as any type of gNB (a base station in a 5G system). The small eNB may be an eNB covering a cell smaller than a macro cell, such as a pico eNB, a micro eNB, or a home (femto) eNB. Alternatively, the base station may be implemented as any other type of base station, such as a NodeB or a base transceiver station (BTS). The base station may include a body (which is also referred to as a base station device) configured to control wireless communication and one or more remote radio heads (RRHs) that are arranged in a different place from the body.

The user equipment may be implemented as a mobile terminal (such as a smartphone, a tablet personal computer (PC), a notebook PC, a portable game terminal, a portable/dongle-type mobile router, and a digital camera), or an in-vehicle terminal (such as a car navigation device). The user equipment may also be implemented as a terminal that performs machine-to-machine (M2M) communication (which is also referred to as a machine type communication (MTC) terminal). In addition, the user equipment may be a wireless communication module (such as an integrated circuit module including a single wafer) installed on each of the user equipment described above.

### [Application examples of a base station]

### (First application example)

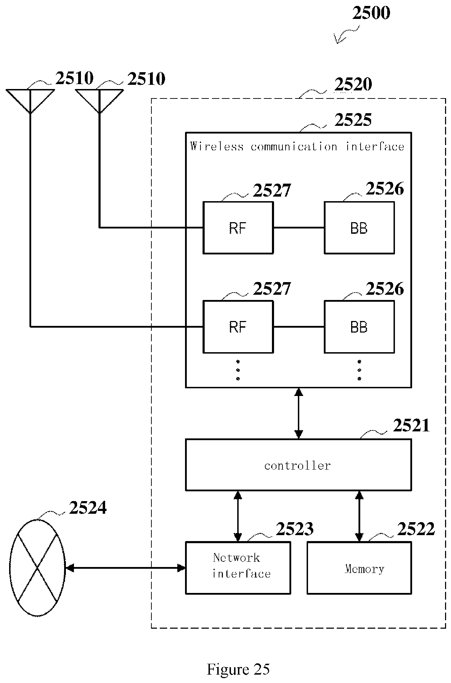

Figure 25 is a block diagram showing a first example of a schematic configuration of an eNB to which the technique of the present disclosure may be applied. The eNB 2500 includes a single or multiple antennas 2510 and a base station device 2520. The base station device 2520 and each of the antennas 2510 may be connected to each other via a RF cable.

Each of the antennas 2510 includes a single or multiple antenna elements (such as multiple antenna elements included in a multiple-input multiple-output (MIMO) antenna), and are used for transmitting and receiving wireless signals by the base station device 2520. The eNB 2500 may include multiple antennas 2510, as shown in Figure 25. For example, the multiple antennas 2510 may be compatible with multiple frequency bands used by the eNB 2500. Although Figure 25 shows an example in which the eNB 2500 includes multiple antennas 2510, the eNB 2500 may include a single antenna 2510.

The base station device 2520 includes a controller 2521, a memory 2522, a network interface 2523, and a wireless communication interface 2525.

The controller 2521 may be, for example, a CPU or a DSP, and operates various functions of a higher layer of the base station device 2520. For example, the controller 2521 generates a data packet based on data in a signal processed by the wireless communication interface 2525, and transfers the generated packet via the network interface 2523. The controller 2521 may bundle data from multiple baseband processors to generate a bundled packet, and transfer the generated bundled packet. The controller 2521 may have logical functions of performing control such as radio resource control, radio bearer control, mobility management, admission control, and scheduling. The control may be performed in conjunction with an adjacent eNB or a core network node. The memory 2522 includes a RAM and a ROM, and stores a program executed by the controller 2521, and various types of control data (such as a terminal list, transmission power data, and scheduling data).

The network interface 2523 is a communication interface for connecting the base station device 2520 to a core network 2524. The controller 2521 may communicate with a core network node or another eNB via the network interface 2523. In this case, the eNB 2500, and the core network node or the other eNB may be connected to each other through a logical interface (such as an S1 interface and an X2 interface). The network interface 2523 may be a wired communication interface or a wireless communication interface for a wireless backhaul line. In a case that the network interface 2523 is a wireless communication interface, the network interface 2523 may use a higher frequency band for wireless communication than a frequency band used by the wireless communication interface 2525.

The wireless communication interface 2525 supports any cellular communication scheme (such as Long Term Evolution (LTE) and LTE-Advanced), and provides wireless connection to a terminal positioned in a cell of the eNB 2500 via the antenna 2510. The wireless communication interface 2525 may typically include, for example, a baseband (BB) processor 2526 and an RF circuit 2527. The BB processor 2526 may perform, for example, coding/decoding, modulation/demodulation and multiplexing/de-multiplexing, and perform various types of signal processes of layers (for example, L1, media access control (MAC), radio link control (RLC) and packet data convergence protocol (PDCP)). Instead of the controller 2521, the BB processor 2526 may have a part or all of the above logical functions. The BB processor 2526 may be a memory storing a communication control program, or a module including a processor and a related circuit configured to execute the program. Updating the program may change the functions of the BB processor 2526. The module may be a card or a blade inserted into a slot of the base station device 2520. Alternatively, the module may be a chip mounted on the card or the blade. In addition, the RF circuit 2527 may include, for example, a frequency mixer, a filter or an amplifier, and transmits and receives wireless signals via the antenna 2510.

As shown in Figure 25, the wireless communication interface 2525 may include multiple BB processors 2526. For example, the multiple BB processors 2526 may be compatible with multiple frequency bands used by the eNB 2500. As shown in Figure 25, the wireless communication interface 2525 may include multiple RF circuits 2527. For example, the multiple RF circuits 2527 may be compatible with multiple antenna elements. Although Figure 25 shows an example in which the wireless communication interface 2525 includes multiple BB processors 2526 and multiple RF circuits 2527, the wireless communication interface 2525 may include a single BB processor 2526 or a single RF circuit 2527.

### (Second application example)

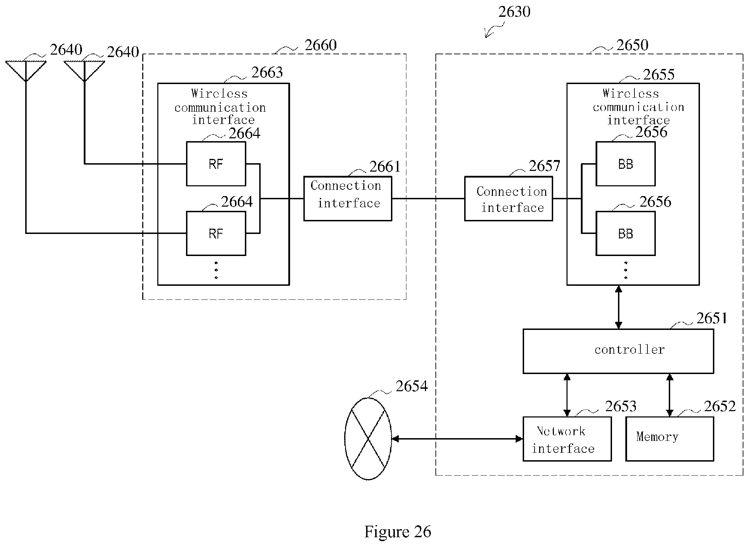

Figure 26 is a block diagram showing a second example of a schematic configuration of an eNB to which the technique of the present disclosure may be applied. An eNB 2630 includes a single or multiple antennas 2640, a base station device 2650 and an RRH 2660. The RRH 2660 and the antennas 2640 may be connected to each other via an RF cable. The base station device 2650 and the RRH 2660 may be connected to each other via a high-speed line such as an optical fiber cable.

Each of the antennas 2640 includes a single or multiple antennal elements (such as multiple antenna elements included in a multiple-input multiple-output (MIMO) antenna), and is used for the RRH 2660 to transmit and receive wireless signals. As shown in Figure 26, the eNB 2630 may include multiple antennas 2640. For example, the multiple antennas 2640 may be compatible with multiple frequency bands used by the eNB 2630. Although Figure 26 shows an example in which the eNB 2630 includes multiple antennas 2640, the eNB 2630 may include a single antenna 2640.

The base station device 2650 includes a controller 2651, a memory 2652, a network interface 2653, a wireless communication interface 2655, and a connection interface 2657. The controller 2651, the memory 2652, and the network interface 2653 are the same as the controller 2521, the memory 2522, and the network interface 2523 described with reference to Figure 25.

The wireless communication interface 2655 supports any cellular communication scheme (such as LTE and LTE-advanced), and provides wireless communication with a terminal located in a sector corresponding to the RRH 2660 via the RRH 2660 and the antenna 2640. The wireless communication interface 2655 may typically include, for example, a BB processor 2656. The BB processor 2656 is the same as the BB processor 2526 described with reference to Figure 25, except that the BB processor 2656 is connected to an RF circuit 2664 of the RRH 2660 via the connection interface 2657. As show in Figure 26, the wireless communication interface 2655 may include multiple BB processors 2656. For example, the multiple BB processors 2656 may be compatible with the multiple frequency bands used by the eNB 2630. Although Figure 26 shows an example in which the wireless communication interface 2655 includes multiple BB processors 2656, the wireless communication interface 2655 may include a single BB processor 2656.

The connection interface 2657 is an interface for connecting the base station device 2650 (the wireless communication interface 2655) to the RRH 2660. The connection interface 2657 may be a communication module for communication in the above-described high speed line that connects the base station device 2650 (the wireless communication interface 2655) to the RRH 2660.

The RRH 2660 includes a connection interface 2661 and a wireless communication interface 2663.

The connection interface 2661 is an interface for connecting the RRH 2660 (the wireless communication interface 2663) to the base station device 2650. The connection interface 2661 may also be a communication module for communication in the above high-speed line.

The wireless communication interface 2663 transmits and receives wireless signals via the antenna 2640. The wireless communication interface 2663 may typically include, for example, the RF circuit 2664. The RF circuit 2664 may include, for example, a frequency mixer, a filter and an amplifier, and transmits and receives wireless signals via the antenna 2640. The wireless communication interface 2663 may include multiple RF circuits 2664, as shown in Figure 26. For example, the multiple RF circuits 2664 may support multiple antenna elements. Although Figure 26 shows the example in which the wireless communication interface 2663 includes multiple RF circuits 2664, the wireless communication interface 2663 may include a single RF circuit 2664.

In the eNB 2500 shown in Figure 25 and the eNB 2630 shown in Figure 26, the connection unit 1910, the generation unit 1930, the generation unit 1940, the allocation unit 1950, and the selection unit 1960 described with reference to Figure 19 may be implemented by the controller 2521 and/or the controller 2651. At least a part of the functions may be implemented by the controller 2521 and the controller 2651. For example, the controller 2521 and/or the controller 2651 may perform functions of connecting to a user equipment, generating response information, generating recommendation information for an IAB parent node, allocating downlink resources, and determining to transmit downlink data through an IAB connection or a direct connection, by executing instructions stored in a corresponding memory.

### <Application examples regarding a terminal device>

### (First application example)

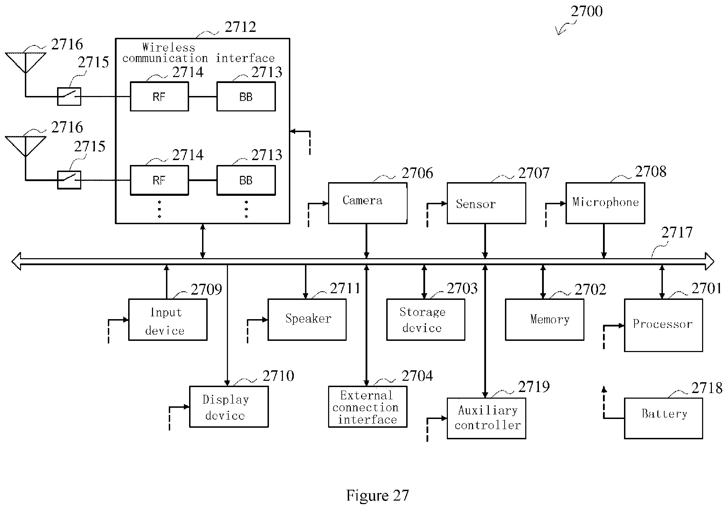

Figure 27 is a block diagram showing an example of a schematic configuration of a smartphone 2700 to which the technology according to the present disclosure may be applied. The smartphone 2700 includes a processor 2701, a memory 2702, a storage device 2703, an external connection interface 2704, a camera 2706, a sensor 2707, a microphone 2708, an input device 2709, a display device 2710, a speaker 2711, a wireless communication interface 2712, one or more antenna switches 2715, one or more antennas 2716, a bus 2717, a battery 2718, and an auxiliary controller 2719.

The processor 2701 may be, for example, a CPU or a system on a chip (SoC), and controls functions of an application layer and another layer of the smartphone 2700. The memory 2702 includes a RAM and a ROM, and stores a program executed by the processor 2701 and data. The storage 2703 may include a storage medium such as a semiconductor memory and a hard disk. The external connection interface 2704 is an interface for connecting an external device (such as a memory card and a universal serial bus (USB) device) to the smartphone 2700.

The camera 2706 includes an image sensor (such as a charge coupled device (CCD) and a complementary metal oxide semiconductor (CMOS)), and generates a captured image. The sensor 2707 may include a group of sensors, such as a measurement sensor, a gyro sensor, a geomagnetism sensor, and an acceleration sensor. The microphone 2708 converts sounds inputted to the smartphone 2700 to audio signals. The input device 2709 includes, for example, a touch sensor configured to detect touch onto a screen of the display device 2710, a keypad, a keyboard, a button, or a switch, and receives an operation or information inputted from a user. The display device 2710 includes a screen (such as a liquid crystal display (LCD) and an organic light-emitting diode (OLED) display), and displays an output image of the smartphone 2700. The speaker 2711 converts audio signals outputted from the smartphone 2700 to sounds.

The wireless communication interface 2712 supports any cellular communication scheme (such as LTE and LTE-advanced), and performs wireless communication. The wireless communication interface 2712 may include, for example, a BB processor 2713 and an RF circuit 2714. The BB processor 2713 may perform, for example, encoding/decoding, modulating/demodulating, and multiplexing/de-multiplexing, and perform various types of signal processing for wireless communication. The RF circuit 2714 may include, for example, a mixer, a filter and an amplifier, and transmits and receives wireless signals via the antenna 2716. The wireless communication interface 2712 may be a chip module having the BB processor 2713 and the RF circuit 2714 integrated thereon. The wireless communication interface 2712 may include multiple BB processors 2713 and multiple RF circuits 2714, as shown in Figure 27. Although Figure 27 shows the example in which the wireless communication interface 2712 includes multiple BB processors 2713 and multiple RF circuits 2714, the wireless communication interface 2712 may include a single BB processor 2713 or a single RF circuit 2714.

Furthermore, in addition to a cellular communication scheme, the wireless communication interface 2712 may support another type of wireless communication scheme such as a short-distance wireless communication scheme, a near field communication scheme, and a wireless local area network (LAN) scheme. In this case, the wireless communication interface 2712 may include the BB processor 2713 and the RF circuit 2714 for each wireless communication scheme.

Each of the antenna switches 2715 switches connection destinations of the antennas 2716 among multiple circuits (such as circuits for different wireless communication schemes) included in the wireless communication interface 2712.

Each of the antennas 2716 includes a single or multiple antenna elements (such as multiple antenna elements included in an MIMO antenna) and is used for the wireless communication interface 2712 to transmit and receive wireless signals. The smartphone 2700 may include the multiple antennas 2716, as shown in Figure 27. Although Figure 27 shows the example in which the smartphone 2700 includes multiple antennas 2716, the smartphone 2700 may include a single antenna 2716.

Furthermore, the smartphone 2700 may include the antenna 2716 for each wireless communication scheme. In this case, the antenna switches 2715 may be omitted from the configuration of the smartphone 2700.

The bus 2717 connects the processor 2701, the memory 2702, the storage 2703, the external connection interface 2704, the camera 2706, the sensor 2707, the microphone 2708, the input device 2709, the display device 2710, the speaker 2711, the wireless communication interface 2712, and the auxiliary controller 2719 to each other. The battery 2718 supplies power to blocks of the smartphone 2700 shown in Figure 27 via feeder lines, which are partially shown as dashed lines in Figure 27. The auxiliary controller 2719 operates a minimum necessary function of the smartphone 2700, for example, in a sleep mode.

In the smart phone 2700 shown in Figure 27, the connection unit 110, the generation unit 130, the type determination unit 140 and the selection unit 150 described by using Figure 1 may be implemented by the processor 2701 or the auxiliary controller 2719. At least a part of the functions may be implemented by the processor 2701 or the auxiliary controller 2719. For example, the processor 2701 or the auxiliary controller 2719 may perform the functions of maintaining an IAB connection and a direct connection, generating request information, determining a serving base station or an IAB node, selecting the IAB connection or the direct connection for uplink data transmission, by executing instructions stored on the memory 2702 or the storage device 2703.

### (Second application example)

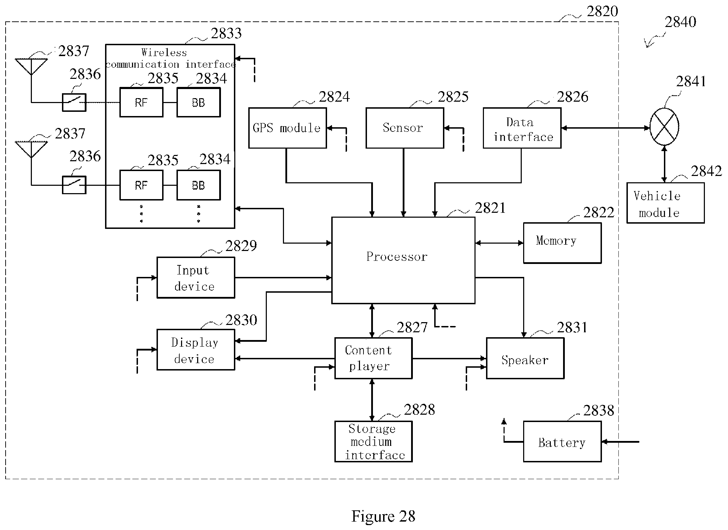

Figure 28 is a block diagram showing an example of a schematic configuration of a navigation apparatus 2820 to which the technology according to the present disclosure may be applied. The navigation apparatus 2820 includes a processor 2821, a memory 2822, a global positioning system (GPS) module 2824, a sensor 2825, a data interface 2826, a content player 2827, a storage medium interface 2828, an input device 2829, a display device 2830, a speaker 2831, a wireless communication interface 2833, one or more antenna switches 2836, one or more antennas 2837, and a battery 2838.

The processor 2821 may be, for example a CPU or a SoC, and controls a navigation function and additional function of the navigation apparatus 2820. The memory 2822 includes RAM and ROM, and stores a program executed by the processor 2821, and data.

The GPS module 2824 determines a position (such as latitude, longitude and altitude) of the navigation apparatus 2820 by using GPS signals received from a GPS satellite. The sensor 2825 may include a group of sensors such as a gyro sensor, a geomagnetic sensor and an air pressure sensor. The data interface 2826 is connected to, for example, an in-vehicle network 2841 via a terminal that is not shown, and acquires data (such as vehicle speed data) generated by the vehicle.

The content player 2827 reproduces content stored in a storage medium (such as a CD and DVD) that is inserted into the storage medium interface 2828. The input device 2829 includes, for example, a touch sensor configured to detect touch on a screen of the display device 2830, a button, or a switch, and receives an operation or information inputted from a user. The display device 2830 includes a screen such as an LCD or OLED display, and displays an image of the navigation function or reproduced content. The speaker 2831 outputs a sound for the navigation function or the reproduced content.

The wireless communication interface 2833 supports any cellular communication scheme (such as LTE and LTE-Advanced), and performs wireless communication. The wireless communication interface 2833 may typically include, for example, a BB processor 2834 and an RF circuit 2835. The BB processor 2834 may perform, for example, encoding/decoding, modulating/demodulating and multiplexing/demultiplexing, and perform various types of signal processing for wireless communication. The RF circuit 2835 may include, for example, a mixer, a filter and an amplifier, and transmits and receives wireless signals via the antenna 2837. The wireless communication interface 2833 may also be a chip module having the BB processor 2834 and the RF circuit 2835 integrated thereon. As shown in Figure 28, the wireless communication interface 2833 may include multiple BB processors 2834 and multiple RF circuits 2835. Although Figure 28 shows the example in which the wireless communication interface 2833 includes multiple BB processors 2834 and multiple RF circuits 2835, the wireless communication interface 2833 may include a single BB processor 2834 and a single RF circuit 2835.

Furthermore, in addition to a cellular communication scheme, the wireless communication interface 2833 may support another type of wireless communication scheme such as a short-distance wireless communication scheme, a near field communication scheme, and a wireless LAN scheme. In this case, the wireless communication interface 2833 may include the BB processor 2834 and the RF circuit 2835 for each wireless communication scheme.

Each of the antenna switches 2836 switches connection destinations of the antennas 2837 among multiple circuits (such as circuits for different wireless communication schemes) included in the wireless communication interface 2833.

Each of the antennas 2837 includes a single or multiple antenna elements (such as multiple antenna elements included in an MIMO antenna), and is used for the wireless communication interface 2833 to transmit and receive wireless signals. As shown in Figure 28, the navigation apparatus 2820 may include multiple antennas 2837. Although Figure 28 shows the example in which the navigation apparatus 2820 includes multiple antennas 2837, the navigation apparatus 2820 may include a single antenna 2837.

Furthermore, the navigation apparatus 2820 may include the antenna 2837 for each wireless communication scheme. In this case, the antenna switches 2836 may be omitted from the configuration of the navigation apparatus 2820.

The battery 2838 supplies power to the blocks of the navigation apparatus 2820 shown in Figure 28 via feeder lines that are partially shown as dash lines in Figure 28. The battery 2838 accumulates power supplied from the vehicle.

In the navigation device 2820 shown in Figure 28, the connecting unit 110, the generation unit 130, the type determination unit 140, and the selection unit 150 described by using Figure 1 may be implemented by the processor 2821. At least a part of the functions may be implemented by the processor 2821. For example, the processor 2821 may perform the functions of maintaining an IAB connection and a direct connection, generating request information, determining a serving base station or an IAB node, selecting the IAB connection or the direct connection for uplink data transmission, by executing instructions stored on the memory 2822.

The technical solution of the present disclosure may be implemented as an in-vehicle system (or vehicle) 2840 including one or more blocks of the navigation apparatus 2820, the in-vehicle network 2841, and a vehicle module 2842. The vehicle module 2842 generates vehicle data such as vehicle speed, engine speed, and fault information, and outputs the generated data to the in-vehicle network 2841.

The preferred embodiments of the present disclosure are described above with reference to the drawings, but the present disclosure is not limited to the above examples. Various alternations and modifications may be obtained by those skilled in the art within the scope of the claims, and it should be understood that these alternations and modifications shall naturally fall within the technical scope of the present disclosure.

For example, a unit shown by a dashed box in the functional block diagram shown in the drawings indicates that the functional unit is optional in the corresponding device, and the optional functional units may be combined in an appropriate manner to achieve a desired function.

For example, multiple functions included in one unit in the above embodiments may be implemented by separate devices. Alternatively, multiple functions implemented by multiple units in the above embodiments may be implemented by separate devices, respectively. In addition, one of the above functions may be implemented by multiple units. Apparently, such configurations are within the technical scope of the present disclosure.

In this specification, the steps described in the flowchart include not only processes performed in time series as the order described, but also processes performed in parallel or individually instead of having to be performed in time series. Further, even in the steps processed in time series, the order can be appropriately changed.

Although the embodiments of the present disclosure have been described above in detail in connection with the drawings, it is appreciated that the embodiments described above are merely illustrative rather than limitative for the present disclosure. Those skilled in the art may make various modifications and variations to the above embodiments without departing from the spirit and scope of the present disclosure. Therefore, the scope of the present disclosure is defined merely by the appended claims and equivalents thereof.

## Claims

1. An electronic device, comprising processing circuitry configured to:
connect to an integrated access and backhaul, IAB, donor through one or more IAB nodes;
connect directly to a serving base station of the electronic device; and
transmit uplink data utilizing an IAB connection with the IAB donor or a direct connection with the serving base station, and receive downlink data utilizing the IAB connection or the direct connection.

2. The electronic device according to claim 1, wherein the processing circuitry is further configured to:
send request information to the serving base station;
receive response information from the serving base station, wherein the response information comprises identification information or type information of the serving base station; and
determine, based on the identification information or the type information of the serving base station, whether the serving base station is a serving base station or an IAB node.

3. The electronic device according to claim 1, wherein the processing circuitry is further configured to:
send request information to an IAB node serving as a parent node of the electronic device;
receive response information from the parent node, wherein the response information comprises identification information or type information of the parent node; and
determine, based on the identification information or the type information of the parent node, whether the parent node is a serving base station or an IAB node.

4. The electronic device according to claim 1, wherein the serving base station is the same as the IAB donor.

5. The electronic device according to claim 4, wherein the processing circuitry is further configured to:
after connected to the IAB donor through the one or more IAB nodes, receive information about the IAB donor from an IAB node serving as a parent node of the electronic device; and
connect directly to the IAB donor based on the information about the IAB donor.

6. The electronic device according to claim 4, wherein the processing circuitry is further configured to:
after connected directly to the serving base station, receive recommendation information about an IAB node serving as a parent node of the electronic device from the serving base station;
determine the IAB node serving as the parent node based on the recommendation information; and
connect to the IAB node serving as the parent node.

7. The electronic device according to claim 4, wherein the processing circuitry is further configured to:
receive, in a case that the IAB donor is changed, information about an IAB donor after handover from an IAB node serving as a parent node of the electronic device; and
connect directly to the IAB donor after handover, based on the information about the IAB donor after handover.

8. The electronic device according to claim 4, wherein the processing circuitry is further configured to:
determine an IAB node after handover serving as a parent node of the electronic device, wherein the IAB donor of the IAB node after handover serving as a parent node is the same as the serving base station;
connect to the IAB node after handover serving as a parent node; and
send, to the serving base station, information about the IAB node after handover serving as a parent node.

9. The electronic device according to claim 1, wherein the serving base station is different from the IAB donor.

10. The electronic device according to claim 9, wherein the processing circuitry is further configured to:
after connecting to the IAB donor through the one or more IAB nodes, receive information about the IAB donor from an IAB node serving as a parent node of the electronic device;
determine a serving base station different from the IAB donor based on the information about the IAB donor; and
connect directly to said serving base station.

11. The electronic device according to claim 9, wherein the processing circuitry is further configured to:
after directly connecting to the serving base station, determine an IAB node serving as a parent node of the electronic device, wherein the IAB donor of the parent node is different from the serving base station; and
connect to the IAB node serving as the parent node.

12. The electronic device according to claim 10 or 11, wherein the processing circuitry is further configured to:
send information about the serving base station to the IAB donor through the one or more IAB nodes, for the IAB donor to establish a connection with the serving base station.

13. The electronic device according to claim 9, wherein the processing circuitry is further configured to:
determine a serving base station after handover;
connect directly to the serving base station after handover; and
send information of the serving base station after handover to the IAB donor through the one or more IAB nodes, for the IAB donor to establish a connection with the serving base station after handover.

14. The electronic device according to claim 9, wherein the processing circuitry is further configured to:
receive, in a case where the IAB donor is changed, information about an IAB donor after handover from an IAB node serving as a parent node of the electronic device; and
send information about the IAB donor after handover to the serving base station, for the serving base station to establish a connection with the IAB donor after handover.

15. The electronic device according to claim 1, wherein the processing circuitry is further configured to:
transmit uplink data using the IAB connection in a case that there are resources in the IAB connection suitable for transmitting the uplink data; and
transmit the uplink data using the direct connection in a case that there is no resource in the IAB connection suitable for transmitting the uplink data.

16. The electronic device according to claim 1, wherein
the IAB donor comprises a non-transparent satellite device or a terrestrial station connected to a transparent satellite device, and
the serving base station comprises a non-transparent satellite device or a terrestrial station connected to a transparent satellite device.

17. An electronic device, comprising a processing circuitry configured to:
connect directly to a user equipment serviced by the electronic device, wherein the user equipment is connected to an integrated access and backhaul, IAB, donor through one or more IAB nodes; and
transmit downlink data utilizing an IAB connection between the user equipment and the IAB donor or a direct connection between the user equipment and the electronic device, and receive uplink data utilizing the IAB connection or the direct connection.

18. The electronic device according to claim 17, wherein the processing circuitry is further configured to:
receive request information from the user equipment; and
send response information to the user equipment, wherein the response information comprises identification information or type information of the electronic device, for the user equipment to determine, based on the identification information or the type information of the electronic device, whether the electronic device is a serving base station or an IAB node.

19. The electronic device according to claim 17, wherein the electronic device is the same as the IAB donor.

20. The electronic device according to claim 19, wherein the processing circuitry is further configured to:
after connected directly to the user equipment, send recommendation information about an IAB node serving as a parent node of the user equipment to the user equipment.

21. The electronic device according to claim 19, wherein the processing circuitry is further configured to:
allocate, to the user equipment, resources for transmitting uplink data and resources for receiving downlink data, wherein the resources for transmitting uplink data and the resources for receiving downlink data are time orthogonal to each other .

22. The electronic device according to claim 17, wherein the electronic device is different from the IAB donor.

23. The electronic device according to claim 22, wherein the processing circuitry is further configured to:
establish a connection with the IAB donor; and
determine, based on notification information from the IAB donor, that the IAB donor of the user equipment is the IAB donor.

24. The electronic device according to claim 22, wherein the processing circuitry is further configured to:
receive, from the IAB donor, the resources for transmitting uplink data allocated by the IAB donor to the user equipment; and
allocate resources for receiving downlink data to the user equipment, wherein the resources for transmitting uplink data and the resources for receiving downlink data are time orthogonal to each other.

25. The electronic device according to claim 17, wherein the processing circuitry is further configured to:
transmit downlink data using the IAB connection in a case that there are resources suitable for transmitting the downlink data in the IAB connection; and
transmit downlink data using the direct connection in a case that there is no resource suitable for transmitting the downlink data in the IAB connection.

26. The electronic device according to claim 17, wherein
the IAB donor comprises a non-transparent satellite device or a terrestrial station connected to a transparent satellite device, and
the electronic device comprises a non-transparent satellite device or a terrestrial station connected to a transparent satellite device.

27. A wireless communication method executed by an electronic device, comprising:
connecting to an integrated access and backhaul, IAB, donor through one or more IAB nodes, and connecting directly to a serving base station of the electronic device; and
transmitting uplink data using an IAB connection with the IAB donor or a direct connection with the serving base station, and receiving downlink data using the IAB connection or the direct connection.

28. The wireless communication method according to claim 27, further comprising:
sending request information to the serving base station;
receiving response information from the serving base station, wherein the response information comprises identification information or type information of the serving base station; and
determining, based on the identification information or the type information of the serving base station, whether the serving base station is a serving base station or an IAB node.

29. The wireless communication method according to claim 27, further comprising:
sending request information to an IAB node serving as a parent node of the electronic device;
receiving response information from the parent node, wherein the response information comprises identification information or type information of the parent node; and
determining, based on the identification information or the type information of the parent node, whether the parent node is a serving base station or an IAB node.

30. The wireless communication method according to claim 27, wherein the serving base station is the same as the IAB donor.

31. The wireless communication method according to claim 30, wherein the wireless communication method further comprises:
after connecting to the IAB donor through the one or more IAB nodes, receiving information about the IAB donor from an IAB node serving as a parent node of the electronic device; and
connecting directly to the IAB donor based on the information about the IAB donor.

32. The wireless communication method according to claim 30, further comprising:
after connecting directly to the serving base station, receiving recommendation information about an IAB node serving as a parent node of the electronic device from the serving base station;
determining the IAB node serving as the parent node based on the recommendation information; and
connecting to the IAB node serving as the parent node.

33. The wireless communication method according to claim 30, further comprising:
receiving, in a case that the IAB donor is changed, information about an IAB donor after handover from the IAB node serving as a parent node of the electronic device; and
connecting directly to the IAB donor after handover, based on the information about the IAB donor after handover.

34. The wireless communication method according to claim 30, further comprising:
determining an IAB node after handover serving as a parent node of the electronic device, wherein the IAB donor of the IAB node after handover serving as a parent node is the same as the serving base station;
connecting to the IAB node after handover serving as a parent node; and
sending, to the serving base station, information about the IAB node after handover serving as a parent node.

35. The wireless communication method according to claim 27, wherein the serving base station is different from the IAB donor.

36. The wireless communication method according to claim 35, further comprising:
after connecting to the IAB donor through one or more IAB nodes, receiving information about the IAB donor from an IAB node serving as a parent node of the electronic device;
determining a serving base station different from the IAB donor based on the information of the IAB donor; and
connecting directly to the serving base station.

37. The wireless communication method according to claim 35, further comprising:
after connecting directly to the serving base station, determining an IAB node serving as a parent node of the electronic device, wherein the IAB donor of the parent node is different from the serving base station; and
connecting to the IAB node serving as the parent node.

38. The wireless communication method according to claim 36 or 37, further comprising:
sending information about the serving base station to the IAB donor through the one or more IAB nodes, for the IAB donor to establish a connection with the serving base station.

39. The wireless communication method according to claim 35, further comprising:
determining a serving base station after handover;
connecting directly to the serving base station after handover; and
sending information of the serving base station after handover to the IAB donor through the one or more IAB nodes, for the IAB donor to establish a connection with the serving base station after handover.

40. The wireless communication method according to claim 35, further comprising:
receiving, in a case where the IAB donor is changed, information about an IAB donor after handover from an IAB node serving as a parent node of the electronic device; and
sending information about the IAB donor after handover to the serving base station, for the serving base station to establish a connection with the IAB donor after handover.

41. The wireless communication method according to claim 27, further comprising:
transmitting uplink data using the IAB connection in a case that there are resources in the IAB connection suitable for transmitting the uplink data; and
transmitting uplink data using the direct connection in a case that there is no resource in the IAB connection suitable for transmitting the uplink data.

42. The method according to claim 27, wherein
the IAB donor comprises a non-transparent satellite device or a terrestrial station connected to a transparent satellite device, and
the serving base station comprises a non-transparent satellite device or a terrestrial station connected to a transparent satellite device.

43. A wireless communication method executed by an electronic device, comprising:
connecting directly to a user equipment serviced by the electronic device, wherein the user equipment is connected to an integrated access and backhaul, IAB, donor through one or more IAB nodes; and
transmitting downlink data using an IAB connection between the user equipment and the IAB donor or a direct connection between the user equipment and the electronic device, and receiving uplink data using the IAB connection or the direct connection.

44. The wireless communication method according to claim 43, further comprising:
receiving request information from the user equipment; and
sending response information to the user equipment, wherein the response information comprises identification information or type information of the electronic device, for the user equipment to determine whether the electronic device is a service base station or an IAB node based on the identification information or the type information of the electronic device.

45. The wireless communication method according to claim 43, wherein the electronic device is the same as the IAB donor.

46. The wireless communication method according to claim 45, further comprising:
after connecting directly to the user equipment, sending recommendation information about an IAB node serving as a parent node of the user equipment to the user equipment.

47. The wireless communication method according to claim 45, further comprising:
allocating, to the user equipment, resources for transmitting uplink data and resources for receiving downlink data, wherein the resources for transmitting uplink data and the resources for receiving downlink data are time orthogonal to each other.

48. The wireless communication method according to claim 43, wherein the electronic device is different from the IAB donor.

49. The wireless communication method according to claim 48, further comprising:
establishing a connection with the IAB donor; and
determining, based on notification information from the IAB donor, that the IAB donor of the user equipment is the IAB donor.

50. The wireless communication method according to claim 48, further comprising:
receiving, from the IAB donor, the resource for transmitting uplink data allocated by the IAB donor to the user equipment; and
allocating resources for receiving downlink data to the user equipment, wherein the resources for transmitting uplink data and the resources for receiving downlink data are time orthogonal to each other.

51. The wireless communication method according to claim 43, further comprising:
transmitting downlink data using the IAB connection in a case that there are resources suitable for transmitting the downlink data in the IAB connection; and
transmitting downlink data using the direct connection in a case that there is no resource suitable for transmitting the downlink data in the IAB connection.

52. The wireless communication method according to claim 43, wherein
the IAB donor comprises a non-transparent satellite device or a terrestrial station connected to a transparent satellite device, and
the electronic device comprises a non-transparent satellite device or a terrestrial station connected to a transparent satellite device.

53. A computer-readable storage medium comprising executable computer instructions, wherein the executable computer instructions, when executed by a computer, cause the computer to perform the wireless communication method according to any one of claims 27 to 52.
